# EUROPEAN PATENT APPLICATION

(11) **EP 3 606 183 A1**
(43) Date of publication of application: **05.02.2020**
(21) Application number: 18772403.4
(22) Date of filing: 02.02.2018
(51) Int. Cl.: H04W 52/02, H04W 24/10, H04W 88/04

(54) **REMOTE COMMUNICATION DEVICE, RELAY COMMUNICATION DEVICE, BASE STATION, METHOD, AND RECORDING MEDIUM**

(30) Priority: 23.03.2017 JP 2017058239
(71) Applicant: Sony Corporation, Tokyo 108-0075 (JP)
(72) Inventor: TANG, Yifu, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2018/003526
(87) International publication number: WO 2018/173506

(57) **Abstract**

Provided is a mechanism for suppressing consumed power of a remote communication apparatus related to measurement.

A remote communication apparatus is capable of communicating with a base station via mediation of communication by a relay communication apparatus configured to be movable, and includes a control unit that selects a link to measure on the basis of association information that correlates a first relay communication apparatus with the remote communication apparatus.

## Description

### TECHNICAL FIELD

The present disclosure relates to a remote communication apparatus, a relay communication apparatus, a base station, a method, and a recording medium.

### BACKGROUND ART

In recent years, development related to Internet of Things (IoT) has been actively conducted. In IoT, radio communication is an important technology theme because diverse things are connected to a network to exchange information. Therefore, in Third Generation Partnership Project (3GPP), standardization of IoT communication such as machine type communication (MTC) and narrow band IoT (NB-IoT) that realizes small packets, low consumed power, or low cost is performed.

In IoT communication, it is desirable to ensure wider coverage with lowest possible consumed power. However, typically, there is a trade-off relationship between consumed power and coverage and accordingly, ensuring wider coverage inevitably increases consumed power. In view of such circumstances, as one of the technologies for achieving both of lower consumed power and wider coverage, relays of communication by relay communication apparatuses are being examined. Since a communication distance can be shortened for a remote communication apparatus that enjoys the relay of communication by the relay communication apparatus, as compared with the case of direct communication with a base station, consumed power can be suppressed.

One of the processes performed by the remote communication apparatus is measurement (in other words, quality measurement). How to efficiently perform measurement is also one of the important examination items in radio communication systems. For example, Patent Document 1 below discloses a technology in which a communication apparatus measures an instructed measurement object.

### CITATION LIST

### PATENT DOCUMENT

Patent Document 1: Japanese Patent Application Laid-Open No. 2016-508346

### SUMMARY OF THE INVENTION

### PROBLEMS TO BE SOLVED BY THE INVENTION

Also in IoT communication, it is considered important how to perform measurement efficiently. This is because at least power is consumed to perform measurement.

For such a reason, the present disclosure provides a mechanism for suppressing consumed power of a remote communication apparatus related to measurement.

### SOLUTIONS TO PROBLEMS

According to the present disclosure, a remote communication apparatus capable of communicating with a base station via mediation of communication by a relay communication apparatus configured to be movable is provided, the remote communication apparatus including a control unit that selects a link to measure on the basis of association information that correlates a first relay communication apparatus with the remote communication apparatus.

Furthermore, according to the present disclosure, a relay communication apparatus configured to be movable to mediate communication between base stations and remote communication apparatuses is provided, the relay communication apparatus including a control unit that uses different resources to transmit a signal to one of the remote communication apparatuses correlated with the relay communication apparatus and a signal to one of the remote communication apparatuses not correlated with the relay communication apparatus.

Furthermore, according to the present disclosure, a base station capable of communicating with remote communication apparatuses via mediation of communication by relay communication apparatuses configured to be movable is provided, the base station including a control unit that sets different resources between for one of the relay communication apparatuses and one of the remote communication apparatuses correlated with each other and for one of the relay communication apparatuses and one of the remote communication apparatuses not correlated with each other.

Furthermore, according to the present disclosure, a remote communication apparatus capable of communicating with a base station via mediation of communication by a relay communication apparatus configured to be movable is provided, the remote communication apparatus including a control unit that controls a measurement process, in which, in a case where another remote communication apparatus is present in a vicinity of the remote communication apparatus, the control unit performs measurement and generates shared information based on a measurement result to share with the another remote communication apparatus in a case where the remote communication apparatus is selected as a representative, and accepts sharing of the shared information from the another remote communication apparatus selected as a representative in a case where the remote communication apparatus is not selected as a representative.

Furthermore, according to the present disclosure, a method executed by a remote communication apparatus capable of communicating with a base station via mediation of communication by a relay communication apparatus configured to be movable is provided, the method including selecting a link to measure on the basis of association information that correlates a first relay communication apparatus with the remote communication apparatus.

Furthermore, according to the present disclosure, a recording medium recording a program is provided, the program causing a computer of a remote communication apparatus capable of communicating with a base station via mediation of communication by a relay communication apparatus configured to be movable, to function as a control unit that selects a link to measure on the basis of association information that correlates a first relay communication apparatus with the remote communication apparatus.

Furthermore, according to the present disclosure, a method executed by a relay communication apparatus configured to be movable to mediate communication between base stations and remote communication apparatuses is provided, the method including using different resources to transmit a signal to one of the remote communication apparatuses correlated with the relay communication apparatus and a signal to one of the remote communication apparatuses not correlated with the relay communication apparatus.

Furthermore, according to the present disclosure, a recording medium recording a program is provided, the program causing a computer of a relay communication apparatus configured to be movable to mediate communication between base stations and remote communication apparatuses, to function as a control unit that uses different resources to transmit a signal to one of the remote communication apparatuses correlated with the relay communication apparatus and a signal to one of the remote communication apparatuses not correlated with the relay communication apparatus.

Furthermore, according to the present disclosure, a method executed by a base station capable of communicating with remote communication apparatuses via mediation of communication by relay communication apparatuses configured to be movable is provided, the method including setting different resources between for one of the relay communication apparatuses and one of the remote communication apparatuses correlated with each other and for one of the relay communication apparatuses and one of the remote communication apparatuses not correlated with each other.

Furthermore, according to the present disclosure, a recording medium recording a program is provided, the program causing a computer of a base station capable of communicating with remote communication apparatuses via mediation of communication by relay communication apparatuses configured to be movable, to function as a control unit that sets different resources between for one of the relay communication apparatuses and one of the remote communication apparatuses correlated with each other and for one of the relay communication apparatuses and one of the remote communication apparatuses not correlated with each other.

Furthermore, according to the present disclosure, a method executed by a remote communication apparatus capable of communicating with a base station via mediation of communication by a relay communication apparatus configured to be movable is provided, the method including controlling a measurement process, in which, the controlling the measurement process includes, in a case where another remote communication apparatus is present in a vicinity of the remote communication apparatus, performing measurement and generating shared information based on a measurement result to share with the another remote communication apparatus in a case where the remote communication apparatus is selected as a representative, and accepting sharing of the shared information from the another remote communication apparatus selected as a representative in a case where the remote communication apparatus is not selected as a representative.

Furthermore, according to the present disclosure, a recording medium recording a program is provided, the program causing a computer of a remote communication apparatus capable of communicating with a base station via mediation of communication by a relay communication apparatus configured to be movable, to function as a control unit that controls a measurement process, in which, in a case where another remote communication apparatus is present in a vicinity of the remote communication apparatus, the control unit performs measurement and generates shared information based on a measurement result to share with the another remote communication apparatus in a case where the remote communication apparatus is selected as a representative, and accepts sharing of the shared information from the another remote communication apparatus selected as a representative in a case where the remote communication apparatus is not selected as a representative.

### EFFECTS OF THE INVENTION

As described above, according to the present disclosure, a mechanism for suppressing consumed power of a remote communication apparatus related to measurement is provided. Note that the above-mentioned effect is not necessarily limited, and any effects indicated in the present description or other effects that can be learned from the present description may be exhibited together with the above-mentioned effect or instead of the above-mentioned effect.

### BRIEF DESCRIPTION OF DRAWINGS

Fig. 1 is a diagram for explaining an example of the configuration of a system according to an embodiment of the present disclosure.
Fig. 2 is a block diagram illustrating an example of the configuration of a base station according to the embodiment.
Fig. 3 is a block diagram illustrating an example of the configuration of relay user equipment (UE) according to the embodiment.
Fig. 4 is a block diagram illustrating an example of the configuration of remote UE according to the embodiment.
Fig. 5 is a sequence diagram illustrating an example of the flow of a measurement procedure executed in the system according to a first embodiment.
Fig. 6 is a sequence diagram illustrating an example of the flow of a measurement procedure executed in the system according to the embodiment.
Fig. 7 is a flowchart illustrating an example of the flow of a measurement implementation determination process executed in the remote UE according to the embodiment.
Fig. 8 is a flowchart illustrating an example of the flow of a measurement process executed in a remote UE group according to a second embodiment.
Fig. 9 is a diagram for explaining a first working example.
Fig. 10 is a diagram for explaining an example of resource setting and measurement in the working example.
Fig. 11 is a diagram for explaining an example of resource setting and measurement in the working example.
Fig. 12 is a diagram for explaining a second working example.
Fig. 13 is a diagram for explaining an example of resource setting and measurement in the working example.
Fig. 14 is a sequence diagram for explaining a first scenario of a fourth working example.
Fig. 15 is a sequence diagram for explaining a second scenario of the working example.
Fig. 16 is a sequence diagram for explaining a third scenario of the working example.
Fig. 17 is a sequence diagram for explaining a fourth scenario of the working example.
Fig. 18 is a sequence diagram for explaining a fifth scenario of the working example.
Fig. 19 is a diagram for explaining a sixth working example.
Fig. 20 is a diagram for explaining a seventh working example.
Fig. 21 is a sequence diagram for explaining a first scenario of an eighth working example.
Fig. 22 is a sequence diagram for explaining a second scenario of the working example.
Fig. 23 is a sequence diagram for explaining a third scenario of the working example.
Fig. 24 is a sequence diagram for explaining a fourth scenario of the working example.
Fig. 25 is a sequence diagram for explaining a fifth scenario of the working example.
Fig. 26 is a sequence diagram for explaining a sixth scenario of the working example.
Fig. 27 is a sequence diagram for explaining a seventh scenario of the working example.
Fig. 28 is a sequence diagram for explaining an eighth scenario of the working example.
Fig. 29 is a sequence diagram for explaining a ninth scenario of the working example.
Fig. 30 is a sequence diagram for explaining a tenth scenario of the working example.
Fig. 31 is a sequence diagram for explaining an eleventh scenario of the working example.
Fig. 32 is a sequence diagram for explaining a twelfth scenario of the working example.
Fig. 33 is a sequence diagram for explaining a thirteenth scenario of the working example.
Fig. 34 is a sequence diagram for explaining a fourteenth scenario of the working example.
Fig. 35 is a sequence diagram for explaining a fifteenth scenario of the working example.
Fig. 36 is a sequence diagram for explaining a sixteenth scenario of the working example.
Fig. 37 is a sequence diagram for explaining a seventeenth scenario of the working example.
Fig. 38 is a sequence diagram for explaining an eighteenth scenario of the working example.
Fig. 39 is a sequence diagram for explaining a nineteenth scenario of the working example.
Fig. 40 is a sequence diagram for explaining a twentieth scenario of the working example.
Fig. 41 is a block diagram illustrating a first example of a schematic configuration of an evolved node B (eNB).
Fig. 42 is a block diagram illustrating a second example of a schematic configuration of the eNB.
Fig. 43 is a block diagram illustrating an example of a schematic configuration of a smartphone.
Fig. 44 is a block diagram illustrating an example of a schematic configuration of a car navigation apparatus.

### MODE FOR CARRYING OUT THE INVENTION

Hereinafter, favorable embodiments of the present disclosure will be described in detail with reference to the accompanying drawings. Note that, in the present description and the drawings, constituent elements having substantially the same functional configuration will be denoted by the same reference numeral and redundant description will be omitted.

Furthermore, in the present description and the drawings, there are also cases where elements having substantially the same functional configuration are distinguished by attaching different alphabets after the same reference numeral. For example, a plurality of elements having substantially the same functional configuration is distinguished as remote UE 300A, remote UE 300B, and remote UE 300C as necessary. However, in a case where it is not necessary to particularly distinguish each of a plurality of elements having substantially the same functional configuration, only the same reference numeral is attached. For example, in a case where it is not necessary to particularly distinguish the remote UE 300A, the remote UE 300B, and the remote UE 300C, the remote UE 300A, the remote UE 300B, and the remote UE 300C are simply referred to as remote UE 300.

Note that the description will be given in the following order.
- 1.: Introduction
- 1.1.: Overall Configuration
- 1.2.: Demands related to Relay Communication
- 1.3.: Definitions
- 1.4.: Configuration Example of Each Apparatus
- 2.: First Embodiment
- 2.1.: Technological Problems
- 2.2.: Technological Features
- 3.: Second Embodiment
- 3.1.: Technological Problems
- 3.2.: Technological Features
- 4.: Working Examples
- 4.1.: First Working Example
- 4.2.: Second Working Example
- 4.3.: Third Working Example
- 4.4.: Fourth Working Example
- 4.5.: Fifth Working Example
- 4.6.: Sixth Working Example
- 4.7.: Seventh Working Example
- 4.8.: Eighth Working Example
- 5.: Application Examples
- 6.: Conclusion

### <<1. Introduction>>

### <1.1. Overall Configuration>

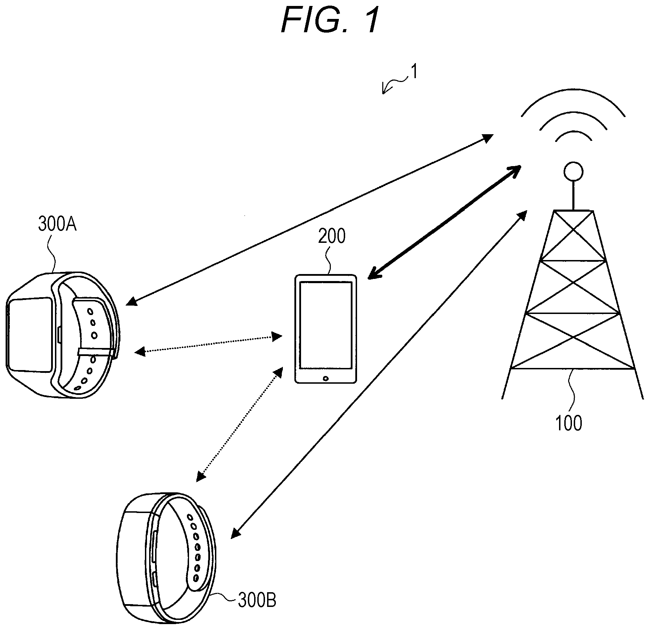

Fig. 1 is a diagram for explaining an example of the configuration of a system 1 according to an embodiment of the present disclosure. As illustrated in Fig. 1, the system 1 according to the present embodiment includes a base station 100, a terminal apparatus 200, and terminal apparatuses 300 (300A and 300B).

The base station 100 administers a cell and provides a radio service to one or more terminal apparatuses located inside the cell. For example, the base station 100 provides a radio service to each of the terminal apparatuses 200 and 300. The cell can be administered in accordance with any radio communication scheme such as 4G, 5G, long term evolution (LTE), or new radio (NR), for example.

The terminal apparatus 200 and the terminal apparatuses 300 perform radio communication with the base station 100 under control of the base station 100. The terminal apparatus 200 and the terminal apparatuses 300 may be so-called user terminals (UE: user equipment). The terminal apparatus 200 and the terminal apparatuses 300 form a link (for example, a downlink or uplink) with the base station 100. Then, the terminal apparatus 200 and the terminal apparatuses 300 transmit uplink signals to the base station 100 and receive downlink signals from the base station 100. Communicating with the base station 100 without interposing another apparatus as described above is also referred to as direct communication.

Here, the terminal apparatus 200 is a relay communication apparatus configured to be movable and having a function of mediating (in other words, relaying) communication from or to another apparatus. For example, the terminal apparatus 200 can relay communication between the base station 100 and the terminal apparatuses 300. In different terms, the base station 100 can communicate with the terminal apparatuses 300 via mediation of communication by the terminal apparatus 200. Specifically, the terminal apparatus 200 receives uplink signals to the base station 100 from the terminal apparatuses 300 to transfer to the base station 100, and receives downlink signals to the terminal apparatuses 300 from the base station 100 to transfer to the terminal apparatuses 300. Communication with the base station 100 via another apparatus as described above is also referred to as relay communication. Typically, the terminal apparatuses 300 can communicate with low consumed power by using relay communication, as compared with direct communication. The links formed between the terminal apparatus 200 and the terminal apparatuses 300 are also referred to as sidelinks. Furthermore, the link formed between the base station 100 and the terminal apparatus 200 is also referred to as a backhaul link. Note that, although Fig. 1 illustrates an example in which one terminal apparatus 200 mediates relay communication, two or more terminal apparatuses 200 may mediate relay communication.

Hereinafter, the terminal apparatus 200 configured to be movable and having a relay function is also referred to as a relay terminal or relay UE, and the terminal apparatus 300 that communicates via the relay UE 200 is also referred to as a remote terminal or remote UE. The remote UE 300 is, for example, an IoT device that performs infrequent communication. Besides, the remote UE 300 may be a smartphone, an in-vehicle terminal, a drone, or the like. Similarly, the relay UE 200 can be realized as, for example, an apparatus dedicated to relays, an IoT device, a smartphone, an in-vehicle terminal, a drone, or the like.

A relay base station is known as an apparatus similar to the relay UE. The relay base station has so far been standardized in 3GPP. Hereinafter, the differences between the relay base station and the relay UE will be described.

First, there is a difference regarding mobility. The relay base station is fixed in position. In contrast, the relay UE has mobility.

Second, there is a difference regarding the owner. The relay base station is typically the property of an operator and works with privilege equal to the privilege of the base station. In contrast, the relay UE is typically the property of a user and has a possibility of working with limited privilege as compared with the privilege of the relay base station. For example, the relay UE works under management of the base station in some cases.

Third, there is a difference regarding assumed use cases. The relay base station is assumed to provide relay communication to smartphones. In contrast, the relay UE is assumed to provide relay communication to MTC terminals, NB-IoT terminals, and the like besides smartphones, and is required to support diverse types of communication traffic including small packet data.

Fourth, there is a difference regarding deployment of the remote UE. In the relay base station, it is assumed that the remote UE is uniformly distributed in the coverage. In contrast, in the relay UE, the remote UE is not necessarily uniformly distributed.

Fifth, there is a difference in physical restrictions between the relay base station and the relay UE. In the relay UE, it is difficult to mount a function equal to the function of the relay base station because the mounting space is limited. Therefore, it is desirable that the relay UE work with the support of the base station.

### <1.2. Demands related to Relay Communication>

A wearable terminal is mentioned as a representative example of the IoT terminal using relay communication. Low consumed power and high reliability communication are required for the wearable terminal and sometimes a large capacity communication is required. In order to cover such use cases, standardization of further enhancement device-to-device (FeD2D) has been started in 2016 in 3GPP. The wearable terminal is typically present near the user. Therefore, by accepting relay communication provided from a user terminal such as a smartphone, the wearable terminal can shorten the communication distance and realize high reliability communication with lower consumed power.

In such relay communication for wearable terminals, it is important to guarantee end-to-end communication quality (quality of service (QoS)) between the base station and the remote UE and it is thus desirable that a high reliability communication path be established. Moreover, in a case where the wearable terminal works as remote UE, it is desirable that relay communication have low complexity, low cost, and low power consumption. In order to realize these conditions, the realization of the following demand items is required.

The first demand item is the improvement of sidelink communication. In the sidelink, closed loop feedback communication for performing retransmission and the like is not performed. However, in order to satisfy the first demand item, it is desirable that functions such as link adaptation and hybrid automatic repeat request (HARQ) using feedback be supported for the purpose of realizing, for example, QoS and high reliability communication.

The second demand item is to reduce consumed power. In order to satisfy the second demand item, it is desirable that functions such as transmission power control and discontinuous reception (DRX) be supported, for example.

The third demand item is service continuity. As for wearable terminals, the link quality changes dynamically. Therefore, in order to satisfy the third demand item, it is desirable that functions such as handover and path switching optimization be supported.

### <1.3. Definitions>

In D2D communication, two devices in communication are also referred to as being in an association state or having an association relationship.

Taking this into account, in the present description, the relay UE 200 and the remote UE 300 having a reliable relationship are referred to as being in an association state or having an association relationship. Furthermore, information that correlates the relay UE 200 and the remote UE 300 having an association relationship is also referred to as association information. The association information includes, for example, a combination of identification information of the relay UE 200 and the remote UE 300 having an association relationship.

Here, a variety of modes can be considered for the relay UE 200 and the remote UE 300 having an association relationship (in other words, having a reliable relationship). Hereinafter, example of the modes will be described.

For example, it can be said that the relay UE 200 and the remote UE 300 owned by the same owner have an association relationship.

For example, it can be said that the relay UE 200 and the remote UE 300 sharing own information with each other have an association relationship. In this case, conceivable shared information includes, for example, own identification information (for example, international mobile subscriber identity (IMSI)), an own list of entities having an association relationship, and other parameters capable of specifying the relay UE 200 or the remote UE 300.

For example, it can be said that the relay UE 200 and the remote UE 300 that can perform sidelink communication without encoding have an association relationship.

For example, it can be said that the relay UE 200 and the remote UE 300 that are close in distance, do not change in relative position, and have the same mobility have an association relationship. The reason is that a case where the same user carries the relay UE 200 and the remote UE 300 is considered.

For example, it can be said that the relay UE 200 and the remote UE 300 capable of secure communication have an association relationship.

Heretofore, an example of the association relationship has been described.

The relay UE having an association relationship with the remote UE is also referred to as associated relay UE or an associated relay. Relay UE other than the relay UE having an association relationship with the remote UE is also referred to as relay UE having no association relationship. Furthermore, relay UE having no association relationship with the remote UE is also referred to as non-associated relay UE or a non-associated relay.

In addition, in a Uu interface between the base station 100 and the relay UE 200 or the remote UE 300, links such as a downlink and an uplink can be formed. The links in this Uu interface are also collectively referred to as Uu links. Meanwhile, in a PC5 interface between the relay UE 200 and the remote UE 300, a sidelink can be formed.

The remote UE 300 can transmit a message to the base station 100 directly via the uplink with the base station 100 or indirectly via the sidelink with the relay UE 200. However, rather than transmitting the message via the uplink with the base station 100, the remote UE 300 desirably transmits the message via the sidelink with the relay UE 200 having an association relationship. This makes it possible to safely suppress consumed power.

It both depends on the link quality whether to use the uplink or the sidelink and which sidelink to use. Therefore, typically, the remote UE 300 monitors and measures each of connection candidate links to connect to a relatively good link for transmission of messages.

Note that, in the present description, "connection" is defined as a concept including being put in a camped-on state, establishing a radio resource control (RRC) connection, and completing an attach procedure. Furthermore, "connect" in the following description may be read as at least one of "camp on", "connect by RRC", or "attach". Note that camp-on stands for being put in a state in which the UE performs a cell selection/cell reselection process and selects a cell for monitoring system information and paging information, or a state in which the remote UE performs a relay selection/relay reselection process and selects a relay for monitoring the sidelink.

### <1.4. Configuration Example of Each Apparatus>

### <1.4.1. Configuration Example of Base Station>

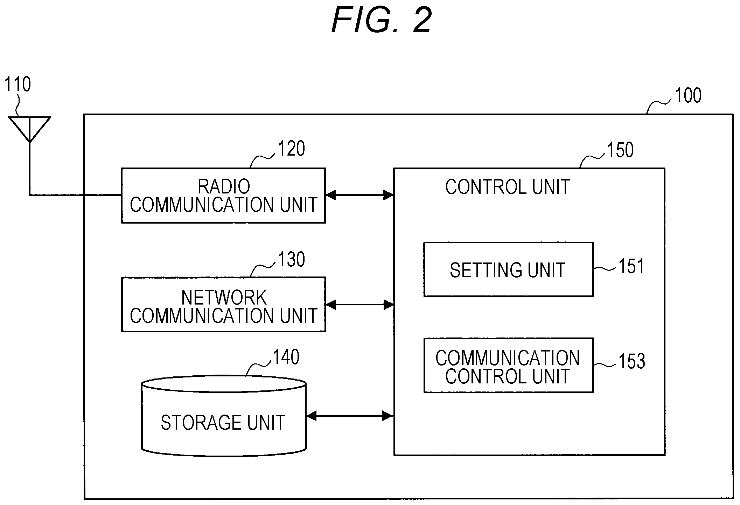

Fig. 2 is a block diagram illustrating an example of the configuration of the base station 100 according to the present embodiment. Referring to Fig. 2, the base station 100 includes an antenna unit 110, a radio communication unit 120, a network communication unit 130, a storage unit 140, and a control unit 150.

### (1) Antenna Unit 110

The antenna unit 110 radiates a signal output from the radio communication unit 120 into space as a radio wave. Furthermore, the antenna unit 110 converts a radio wave in space into a signal and outputs the converted signal to the radio communication unit 120.

### (2) Radio Communication Unit 120

The radio communication unit 120 transmits and receives signals. For example, the radio communication unit 120 transmits a downlink signal to a terminal apparatus and receives an uplink signal from a terminal apparatus.

### (3) Network Communication Unit 130

The network communication unit 130 transmits and receives information. For example, the network communication unit 130 transmits information to another node and receives information from another node. For example, another node mentioned above includes another base station and a core network node.

### (4) Storage Unit 140

The storage unit 140 temporarily or permanently stores programs and diverse types of data for actions of the base station 100.

### (5) Control Unit 150

The control unit 150 provides diverse functions of the base station 100. The control unit 150 includes a setting unit 151 and a communication control unit 153. The setting unit 151 sets resources for the relay UE 200 and the remote UE 300. The resource mentioned here is a resource for discovery or communication in the sidelink or Uu link. The communication control unit 153 performs a process of communication with the relay UE 200 or the remote UE 300 in the set resource. For example, the communication control unit 153 transmits and receives data signals, control signals, reference signals, and discovery signals to and from the relay UE 200 or the remote UE 300. The action of the base station 100 based on the processes by the setting unit 151 and the communication control unit 153 will be described in detail later. Note that the control unit 150 can further include another constituent element in addition to these constituent elements. In other words, the control unit 150 can also perform an action other than the actions of these constituent elements.

### <1.4.2. Configuration Example of Relay UE>

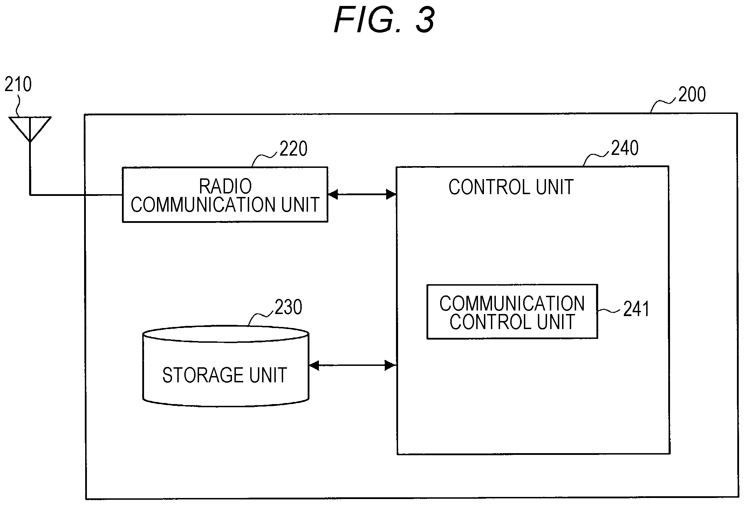

Fig. 3 is a block diagram illustrating an example of the configuration of the relay UE 200 according to the present embodiment. Referring to Fig. 3, the relay UE 200 includes an antenna unit 210, a radio communication unit 220, a storage unit 230, and a control unit 240.

### (1) Antenna Unit 210

The antenna unit 210 radiates a signal output from the radio communication unit 220 into space as a radio wave. Furthermore, the antenna unit 210 converts a radio wave in space into a signal and outputs the converted signal to the radio communication unit 220.

### (2) Radio Communication Unit 220

The radio communication unit 220 transmits and receives signals. For example, the radio communication unit 220 receives a downlink signal from a base station and transmits an uplink signal to a base station.

In the present embodiment, the radio communication unit 220 transmits an uplink signal to the base station 100 to the base station 100 or the relay UE 200, and receives a downlink signal from the base station 100 from the base station 100 or the relay UE 200.

In the present embodiment, the radio communication unit 220 can receive an uplink signal from the remote UE 300 to the base station 100 to transfer the received uplink signal to the base station 100, and can receive a downlink signal from the base station 100 to the remote UE 300 to transfer the received downlink signal to the remote UE 300.

### (3) Storage Unit 230

The storage unit 230 temporarily or permanently stores programs and diverse types of data for actions of the relay UE 200.

### (4) Control Unit 240

The control unit 240 provides diverse functions of the relay UE 200. The control unit 240 includes a communication control unit 241. For example, the communication control unit 241 communicates with the base station 100 or mediates communication between the base station 100 and the remote UE 300 under control of the base station 100. Furthermore, for example, the communication control unit 241 transmits and receives data signals, control signals, reference signals, and discovery signals to and from the base station 100 or the remote UE 300. The action of the relay UE 200 based on the processes by the communication control unit 241 will be described in detail later. Note that the control unit 240 can further include another constituent element in addition to these constituent elements. In other words, the control unit 240 can also perform an action other than the actions of these constituent elements.

### <1.4.3. Configuration Example of Remote UE>

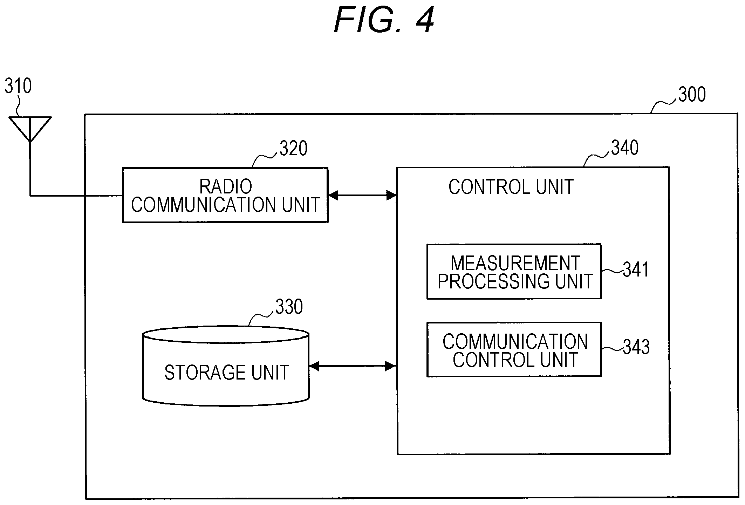

Fig. 4 is a block diagram illustrating an example of the configuration of the remote UE 300 according to the present embodiment. Referring to Fig. 4, the remote UE 300 includes an antenna unit 310, a radio communication unit 320, a storage unit 330, and a control unit 340.

### (1) Antenna Unit 310

The antenna unit 310 radiates a signal output from the radio communication unit 320 into space as a radio wave. Furthermore, the antenna unit 310 converts a radio wave in space into a signal and outputs the converted signal to the radio communication unit 320.

### (2) Radio Communication Unit 320

The radio communication unit 320 transmits and receives signals. For example, the radio communication unit 320 receives a downlink signal from a base station and transmits an uplink signal to a base station.

In the present embodiment, the radio communication unit 320 transmits an uplink signal to the base station 100 to the base station 100 or the relay UE 200, and receives a downlink signal from the base station 100 from the base station 100 or the relay UE 200.

### (3) Storage Unit 330

The storage unit 330 temporarily or permanently stores programs and diverse types of data for actions of the remote UE 300.

### (4) Control Unit 340

The control unit 340 provides diverse functions of the remote UE 300. The control unit 340 includes a measurement processing unit 341 and a communication control unit 343. The measurement processing unit 341 controls a measurement process for the link with the base station 100 or the link with the relay UE 200. The communication control unit 343 performs a process of communication with the base station 100 or the relay UE 200 on the basis of the measurement result. Furthermore, for example, the communication control unit 343 transmits and receives data signals, control signals, reference signals, and discovery signals to and from the base station 100 or the relay UE 200. The action of the remote UE 300 based on the processes by the measurement processing unit 341 and the communication control unit 343 will be described in detail later. Note that the control unit 340 can further include another constituent element in addition to these constituent elements. In other words, the control unit 340 can also perform an action other than the actions of these constituent elements.

### <<2. First Embodiment>>

### <2.1. Technological Problems>

The remote UE can transmit a packet to the base station via the relay UE by FeD2D. However, there have been two factors that make the power consumption of the remote UE large.

The first factor relates to the remote UE out of coverage (OOC). According to the common standard relating to D2D, only OOC remote UE can connect to the relay UE that communicates with the base station. However, it has been supposed that, in order to select which sidelink to connect, the remote UE being OOC should monitor all candidate sidelinks to measure the link quality. Accordingly, a large amount of power consumption has been needed to monitor all candidate sidelinks and measure the link quality.

The second factor relates to the remote UE in coverage (IC). According to the common standard relating to D2D, it has been supposed that IC remote UE should always use the uplink. Therefore, a large amount of power consumption due to uplink transmission has been needed for the IC remote UE.

Taking these two factors into consideration, both of the IC remote UE and the OOC remote UE can communicate via the relay UE, and it is desirable to provide a mechanism capable of suppressing the consumed power related to measurement.

### <2.2. Technological Features>

The remote UE 300 performs measurement on the basis of the association information. By using the association information for measurement, the number of times of measurement is reduced as links to be measured are limited, and consumed power is reduced. Moreover, by using the association information for measurement, resources to be measured are limited, and consumed power is reduced.

Then, the remote UE 300 selects a connection destination (for example, a camp-on destination) link on the basis of the association information and the measurement result. This enables the remote UE 300 to select an appropriate connection destination link. Hereinafter, the technological features of the present embodiment will be described in detail.

### (1) Measurement

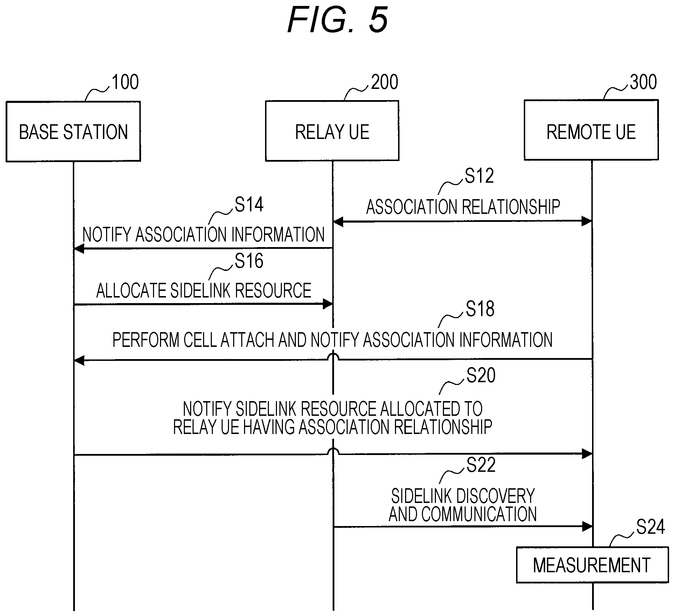

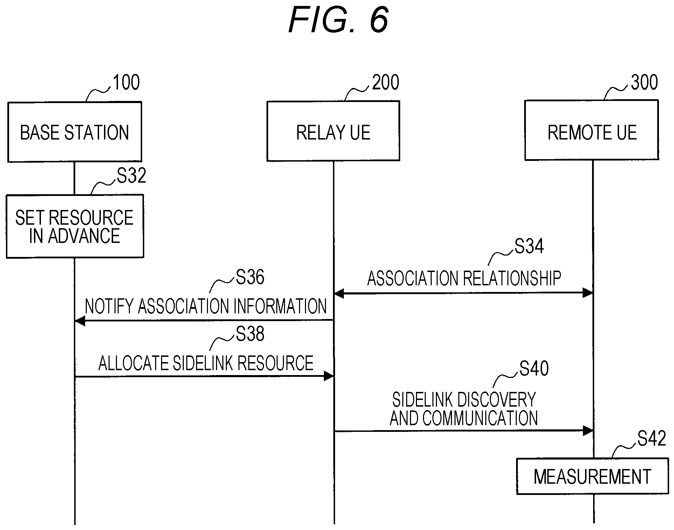

First, an example of the flow of a measurement procedure will be described with reference to Figs. 5 and 6.

Fig. 5 is a sequence diagram illustrating an example of the flow of a measurement procedure executed in the system 1 according to the present embodiment. As illustrated in Fig. 5, the base station 100, the relay UE 200, and the remote UE 300 participate in this sequence. Here, it is assumed that the relay UE 200 and the remote UE 300 are located within the coverage of the base station 100, in other words, are in coverage.

First, the relay UE 200 and the remote UE 300 establish an association relationship (step S12).

Subsequently, the relay UE 200 performs cell search to connect to the base station 100, and notifies the base station 100 of association information (step S14). For example, the relay UE 200 notifies the base station 100 of information in which identification information of the relay UE 200 is correlated with identification information of the remote UE 300 having an association relationship, as association information. For example, physical uplink control channel (PUCCH) or physical uplink shared channel (PUSCH) can be used for notification of association information.

Next, the base station 100 allocates a sidelink resource for between the relay UE 200 and the remote UE 300 and notifies the relay UE 200 of the allocation result (step S16). Here, the sidelink resource is a resource for sidelink discovery or sidelink communication.

Subsequently, the remote UE 300 performs cell search to connect to the base station 100, and notifies the base station 100 of association information (step S18). For example, the remote UE 300 notifies the base station 100 of information in which identification information of the remote UE 300 is correlated with identification information of the relay UE 200 having an association relationship, as association information. For example, PUCCH or PUSCH can be used for notification of association information. Here, the remote UE 300 measures the Uu link when performing cell search.

Next, the base station 100 notifies the remote UE 300 of the sidelink resource allocated to the relay UE 200 having an association relationship with the remote UE 300 (step S20).

Then, the relay UE 200 and the remote UE 300 perform sidelink discovery and sidelink communication using the allocated resource (step S22). At that time, the sidelink discovery may be performed from the side of the relay UE 200 (for example, a discovery signal may be transmitted) or may be performed from the side of the remote UE 300 (for example, a discovery solicitation may be transmitted).

Subsequently, the remote UE 300 performs measurement (step S24).

Fig. 6 is a sequence diagram illustrating an example of the flow of a measurement procedure executed in the system 1 according to the present embodiment. As illustrated in Fig. 6, the base station 100, the relay UE 200, and the remote UE 300 participate in this sequence. Here, it is assumed that the relay UE 200 is located within the coverage of the base station 100, in other words, is in coverage. Furthermore, it is assumed that the remote UE 300 is located outside the coverage of the base station 100, in other words, is out of coverage.

First, the base station 100 sets in advance a resource for sidelink communication or discovery between the relay UE 200 and the remote UE 300 (step S32). This setting in advance is desirably performed at least for the remote UE 300. Meanwhile, this setting in advance may or may not be performed for the relay UE 200.

Subsequently, the relay UE 200 and the remote UE 300 establish an association relationship (step S34).

Next, the relay UE 200 performs cell search to connect to the base station 100, and notifies the base station 100 of association information (step S36). For example, the relay UE 200 notifies the base station 100 of information in which identification information of the relay UE 200 is correlated with identification information of the remote UE 300 having an association relationship, as association information. For example, PUCCH or PUSCH can be used for notification of association information.

Next, the base station 100 allocates a sidelink resource to the relay UE 200 (step S38). However, in a case where the sidelink resource of the relay UE 200 is set in advance, this step may be omitted.

Then, the relay UE 200 and the remote UE 300 perform sidelink discovery and sidelink communication using the allocated resource (step S40). At that time, the sidelink discovery may be performed from the side of the relay UE 200 (for example, a discovery signal may be transmitted) or may be performed from the side of the remote UE 300 (for example, a discovery solicitation may be transmitted).

Subsequently, the remote UE 300 performs measurement (step S42).

Heretofore, examples of the flow of the measurement procedure have been described. The measurement performed by the remote UE 300 will be described in detail below.

### • Measurement of Uu Link

Hereinafter, the measurement of the Uu link will be described. In particular, the remote UE 300 measures the downlink.

Items (or contents) to be measured, in other words, items of quality measurement (measurement objects) can be considered in a variety of ways. For example, at least one of downlink reference signal received power (RSRP), downlink block error rate (BLER), timing advance (TA) between the remote UE 300 and the base station 100, or path loss may be adopted as items of quality measurement.

Furthermore, links to be measured, in other words, links of which quality is to be measured can be considered in a variety of ways. For example, the link to be measured may be at least one of physical downlink control channel (PDCCH) or physical downlink shared channel (PDSCH).

The measurement timing can be considered in a variety of ways.

The remote UE 300 may measure the downlink periodically. In that case, for example, the measurement start time and the measurement duration can be notified from the relay UE 200 or the base station 100, or may be set in advance by the base station 100. Furthermore, the measurement period can be notified from the relay UE 200 or the base station 100, or may be set in advance by the base station 100.

Meanwhile, the remote UE 300 may measure the downlink on the basis of an event trigger. For example, the remote UE 300 can perform measurement X subframes after a measurement request is received from the relay UE 200 or the base station 100. Furthermore, the remote UE 300 can perform measurement in a case where the link quality falls below a threshold α. The threshold α may be appropriately notified by the base station 100 or the relay UE 200 according to the relay capability (for example, the maximum number of pieces of the remote UE 300 connectable to the relay UE 200), the density of the network, or the like, or may be set in advance. In addition, the threshold α may be decided dynamically or statically according to battery information of the remote UE 300 (for example, the remaining battery power and the battery capacity (in other words, the maximum value)).

Note that, in the present description, X may represent a predetermined value or may be dynamically set by any means. Furthermore, it is assumed that a plurality of values of X described in the present description may have different values from each other.

### • Measurement of Sidelink

Hereinafter, the measurement of the sidelink will be described.

Items (or contents) to be measured, in other words, items of quality measurement can be considered in a variety of ways. For example, the items of quality measurement may be at least one of sidelink RSRP, sidelink BLER, TA between the remote UE 300 and the relay UE 200, or path loss.

Furthermore, links to be measured, in other words, links of which quality is to be measured can be considered in a variety of ways. For example, the link to be measured may be at least one of physical sidelink discovery channel (PSDCH), physical sidelink control channel (PSCCH), or physical sidelink shared channel (PSSCH).

The measurement timing can be considered in a variety of ways.

The remote UE 300 may measure the sidelink periodically. In that case, for example, the measurement period can be notified from the relay UE 200 or the base station 100, or may be set in advance by the base station 100.

Meanwhile, the remote UE 300 may measure the sidelink on the basis of an event trigger. For example, the remote UE 300 can perform measurement X subframes after a measurement request is received from the relay UE 200 or the base station 100. Furthermore, the remote UE 300 can perform measurement in a case where the link quality falls below a threshold α. The threshold α may be appropriately notified by the base station 100 or the relay UE 200 according to the relay capability (for example, the maximum number of pieces of the remote UE 300 connectable to the relay UE 200), the density of the network, or the like, or may be set in advance. In addition, the threshold α may be decided dynamically or statically according to the remaining battery power and the battery capacity (in other words, the maximum value) of the remote UE 300. Alternatively, the threshold α may be set as the same value between all pieces of the remote UE 300, or may be set for among pieces of the remote UE 300 belonging to a UE group, or may be set individually for the remote UE 300.

Furthermore, the measurement frequency and accuracy may be updated. For example, in a case where the link quality falls below a predetermined value, the measurement is performed more frequently and more accurately.

### • Resource Setting

The association information may be used for resource setting for sidelink discovery or sidelink communication. For example, different resources may be set for discovery or communication between relay UE 200 having an association relationship (corresponding to a first relay communication apparatus) and relay UE 200 having no association relationship (corresponding to a second relay communication apparatus). In different terms, the base station 100 sets different resources between for the relay UE 200 and the remote UE 300 having an association relationship, and for the relay UE 200 and the remote UE 300 having no association relationship. Then, the relay UE 200 transmits a signal to the remote UE 300 having an association relationship with the relay UE 200 and a signal to the remote UE 300 having no association relationship with the relay UE 200, using different resources. The signal transmitted here is, for example, a discovery signal or a reference signal.

With this procedure, in a case where the link quality with the relay UE 200 having an association relationship is measured, the remote UE 300 only needs to perform measurement on a limited resource on the basis of the association information. Thus, the remote UE 300 can suppress consumed power because it is no longer necessary to perform measurement (in other words, blind detection) on the entire resources.

For example, for a pair of the relay UE 200 and the remote UE 300 having an association relationship, a resource orthogonal to another pair having no association relationship is set. The resource setting for discovery announcement by one from the pair having an association relationship is notified to the other that performs discovery monitoring.

Here, the resource to be set may be a resource pool or a resource block.

The resource setting may be adjusted in a dynamic manner. For example, a resource for sidelink discovery or sidelink communication may be dynamically set by the base station 100.

Note that the association information may be included in a packet transmitted via the sidelink. For example, the association information is included in scheduling assignment (SA) or data.

### • Measurement Skip

In some existing technologies, the quality of other links except the link being connected is constantly measured and, if there is a link of higher quality than the currently connected link, the connection is switched to the link of higher quality.

In contrast, the remote UE 300 according to the present embodiment performs measurement for sidelink discovery or sidelink communication on the basis of the association information. Specifically, the remote UE 300 ascertains the presence or absence of an association relationship with the relay UE 200 on the basis of the association information, and selects a link to measure on the basis of the ascertainment result. For example, the remote UE 300 preferentially selects and measures a link with the relay UE 200 having an association relationship over other links. Then, the remote UE 300 measures the links with the base station 100 and the relay UE 200 having no association relationship with low priority. Preferentially performing measurement may mean to perform measurement more frequently than others, to have an earlier place in the order of measurement, and so on. Furthermore, performing measurement with low priority may mean to skip measurement. Note that skipping measurement means continuing a connection to a currently connected link without performing measurement in a case where a predetermined condition is satisfied. In addition, performing measurement with low priority may mean to lower the frequency of performing measurement. In any case, since the number of times of measurement with respect to links other than the link with the relay UE 200 having an association relationship is reduced as compared with the existing technologies, consumed power can be suppressed.

For example, in a case where the remote UE 300 is connected to the relay UE 200 having an association relationship to communicate, the remote UE 300 skips measurement of other links. With this configuration, since measurement of a link with the relay UE 200 having no association relationship and a link with the base station 100 is skipped, the number of times of measurement is reduced, and consumed power can be suppressed. In particular, the remote UE 300 having only one receiving apparatus (Rx chain) does not have to measure other links by switching links and thus can maintain the continuousness of service.

Skipping may be canceled in a case where a predetermined condition is satisfied. For example, in a case where the remote UE 300 is connected to the relay UE 200 having an association relationship to communicate, the remote UE 300 selects whether or not to skip measurement of other links on the basis of the link quality with the relay UE 200 having an association relationship or the measurement request for another link. More simply, the remote UE 300 monitors only the sidelink being connected and skips measurement of other links unless an exception occurs. Examples of the exception include that the quality of the sidelink being connected is degraded and becomes worse than a threshold. Note that the threshold may be notified from the relay UE 200, or may be set in advance by the base station 100, or may be diverted from a threshold used for past communication with the relay UE 200. Furthermore, examples of the exception include that a measurement request has been received from the relay UE 200, and the like. Note that the measurement request is a message requesting to measure a link other than the currently connected sidelink.

In a case where no OOC relay UE 200 having an association relationship can be discovered in the vicinity, the remote UE 300 can also communicate with the relay UE 200 having no association relationship. A timer may be used to decide whether or not to measure the link quality with the relay UE 200 having no association relationship. For example, in a case where either a reference signal or a discovery signal from the base station 100 or the relay UE 200 having an association relationship cannot be discovered, the remote UE 300 measures a resource pool for the relay UE 200 having no association relationship.

Note that a resource for sidelink discovery or sidelink communication between the relay UE 200 and the remote UE 300 is notified by the base station 100 or the relay UE 200, or set in advance by the base station 100.

Meanwhile, in a case where the remote UE 300 is not connected to the relay UE 200 having an association relationship (corresponding to the first relay communication apparatus) to communicate, the remote UE 300 preferentially selects a link with the relay UE 200 having an association relationship to perform measurement. For example, the remote UE 300 preferentially monitors a resource for the relay UE 200 having an association relationship to measure the link quality. With this configuration, the remote UE 300 can realize the switching of the connection destination to the relay UE 200 having an association relationship more quickly.

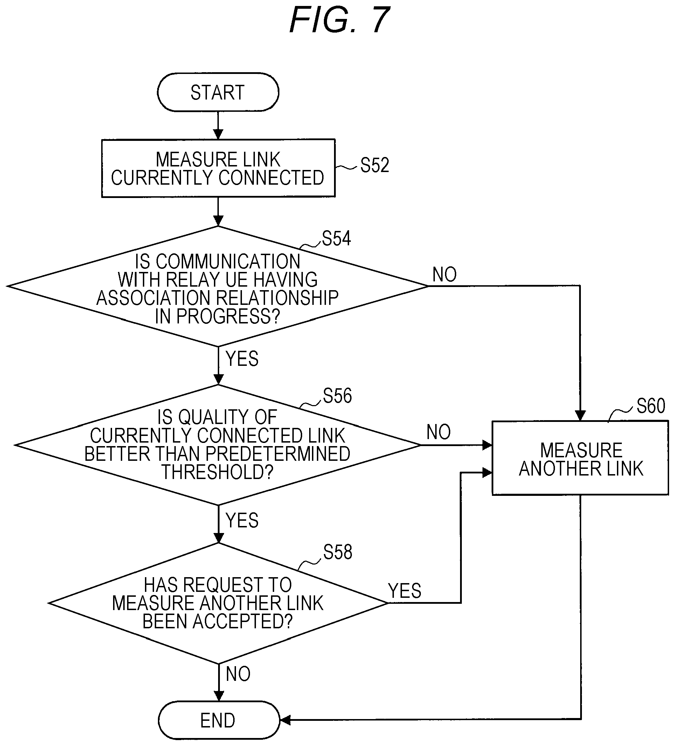

Hereinafter, an example of the flow of a process relating to the measurement skip mentioned above will be described with reference to Fig. 7.

Fig. 7 is a flowchart illustrating an example of the flow of a measurement implementation determination process executed in the remote UE 300 according to the present embodiment. This process is executed by the remote UE 300 being connected to any link.

As illustrated in Fig. 7, the remote UE 300 first measures a link currently connected (step S52).

Subsequently, the remote UE 300 determines whether or not communication with the relay UE 200 having an association relationship is in progress (step S54). In a case where it is determined that communication with the relay UE 200 having an association relationship is not in progress (step S54/NO), the remote UE 300 measures another link (step S60).

In a case where it is determined that the communication with the relay UE 200 having an association relationship is in progress (step S54/YES), the remote UE 300 determines whether or not the quality of the currently connected link is better than a predetermined threshold (step S56). In a case where it is determined that the quality of the currently connected link is worse than the predetermined threshold (step S56/NO), the remote UE 300 measures another link (step S60).

In a case where it is determined that the quality of the currently connected link is better than the predetermined threshold (step S56/YES), the remote UE 300 determines whether or not a request to measure another link has been accepted (step S58). In a case where it is determined that a request to measure another link has been accepted (step S58/YES), the remote UE 300 measures another link (step S60).

In a case where it is determined that a request to measure another link has not been accepted (step S58/NO), the process is terminated.

### (2) Selection of Connection Destination Link

### (2.1) Selecting Subject

A connection destination link of the remote UE 300 is selected by any entity. Note that selection of a connection destination link is also referred to as decision in some cases. Furthermore, it is assumed that the connection destination mentioned here means a camp-on destination.

### • Remote UE 300

The connection destination link of the remote UE 300 may be decided by the remote UE 300. In that case, the remote UE 300 decides the connection destination link for itself on the basis of the measurement result (for example, downlink RSRP, sidelink RSRP, and the like).

### • Relay UE 200

The connection destination link of the remote UE 300 may be decided by the relay UE 200. In that case, the remote UE 300 reports, to the relay UE 200, at least information indicating the measurement result. Then, the relay UE 200 decides the connection destination link of the remote UE 300 on the basis of the report from the remote UE 300.

The contents of the report can be considered in a variety of ways. For example, the contents of the report include information indicating the measurement result. The contents of the report may include other information such as the battery information or the association information.

The reporting timing can be considered in a variety of ways. For example, the report may be issued periodically. Furthermore, the report may be issued X subframes after measurement. The value of this X may be a predetermined value, or may be notified by the base station 100 or the relay UE 200, or may be decided by the remote UE 300. Furthermore, the report may be issued at a timing when a report request is received from the relay UE 200 or the base station 100.

The reporting path is a sidelink.

### • Base Station 100

The connection destination link of the remote UE 300 may be decided by the base station 100. In that case, the remote UE 300 reports, to the base station 100, at least information indicating the measurement result. Then, the base station 100 decides the connection destination link of the remote UE 300 on the basis of the report from the remote UE 300.

The contents of the report can be considered in a variety of ways. For example, the contents of the report include information indicating the measurement result. The contents of the report may include other information such as the battery information or the association information.

The reporting timing can be considered in a variety of ways. For example, the report may be issued periodically. Furthermore, the report may be issued X subframes after measurement. The value of this X may be a predetermined value, or may be notified by the base station 100 or the relay UE 200, or may be decided by the remote UE 300. Furthermore, the report may be issued at a timing when a report request is received from the relay UE 200 or the base station 100.

The reporting path may be an indirect path via the relay UE 200, in other words, the sidelink, and the uplink. Furthermore, the reporting path may only be a direct path, in other words, the uplink.

### (2.2) Decision Method

The connection destination link (for example, a link to be camped on) is decided on the basis of the association information. Specifically, the connection destination link is decided in accordance with a priority order based on the association information. The link with the relay UE 200 having an association relationship is preferentially decided as the connection destination link. With this configuration, the remote UE 300 is enabled to perform safe communication while suppressing power consumption. Furthermore, the link with the base station 100 is decided as the connection destination link with a priority next to the link with the relay UE 200 having an association relationship. With this configuration, the remote UE 300 is enabled at least to perform safe communication. In addition, the link with the relay UE 200 having no association relationship is decided as the connection destination link with a priority next to the link with the base station 100. With this configuration, the remote UE 300 is enabled to suppress power consumption. In this manner, the connection destination is decided most preferentially to the relay UE 200 having an association relationship, otherwise decided to the base station 100, and otherwise decided to the relay UE 200 having no association relationship.

The connection destination link is decided on the basis of the measurement result in accordance with the priority order based on the association information as described above. Hereinafter, an example of conditions of the decision will be described.

### • Relay UE 200 having Association Relationship

For example, in a case where the link quality with the relay UE 200 having an association relationship is better than a threshold Q_{sidelink} and the link quality with the base station 100 is worse than a threshold Q_{Uu_link}, the connection destination is decided to the relay UE 200 having an association relationship.

For example, in a case where the link quality with the relay UE 200 having an association relationship is better than the threshold Q_{sidelink}, and the link quality with the base station 100 is better than the threshold Q_{Uu_link}, but a magnification X in which the quality of the Uu link is better than the quality of the sidelink does not exceed a threshold θ, the connection destination is decided to the relay UE 200 having an association relationship. Here, X = Q_{Uu_link}/Q_{sidelink} is held.

For example, in a case where the link quality with the relay UE 200 having an association relationship is better than the threshold Q_{sidelink}, and the link quality with the base station 100 is better than the threshold Q_{Uu_link}, but the magnification X in which the quality of the Uu link is better than the quality of the sidelink exceeds the threshold θ, the connection destination is decided to the base station 100. Here, X = Q_{Uu_link}/Q_{sidelink} is held.

### • Base Station 100

For example, in a case where the link quality with the base station 100 is better than the threshold Q_{Uu_link} and the link quality with the relay UE 200 having an association relationship is worse than the threshold Q_{sidelink}, the connection destination is decided to the base station 100.

### • Relay UE 200 having No Association Relationship

For example, in a case where the link quality with the relay UE 200 having an association relationship is worse than threshold Q_{sidelink}, the link quality with the base station 100 is worse than threshold Q_{Uu_link}, and the link quality with the relay UE 200 having no association relationship is better than the threshold Q_{sidelink}, the connection destination is decided to the base station 100.

Heretofore, an example of the decision conditions for the connection destination link has been described. The threshold Q_{Uu_link}, the threshold Q_{sidelink}, and the threshold θ described above may be notified or set in advance by the base station 100 or the relay UE 200, or may be decided by a deciding subject. Moreover, these thresholds may be dynamically altered according to the measurement result.

### <<3. Second Embodiment>>

### <3.1. Technological Problems>

In D2D communication, each piece of UE separately performs measurement. It is assumed that some pieces of the remote UE are located very proximal to other remote UE. In that case, the measurement results of respective pieces of the remote UE are considered to be very similar. On this account, performing measurement by all the remotes is considered to be a waste of radio resources and power.

In view of such a background, the present embodiment will propose a mechanism for suppressing the overall power consumed by a plurality of pieces of the remote UE by sharing a measurement result between the plurality of pieces of the remote UE assumed to have similar measurement results.

### <3.2. Technological Features>

A plurality of pieces of the remote UE 300 located in the vicinity shares the measurement result.

For this purpose, one or a few pieces of the remote UE 300 among the plurality of pieces of the remote UE 300 located in the vicinity perform measurement as a representative, and share the result of the measurement with other remote UE 300. Specifically, in a case where other remote UE 300 is present in the vicinity, the remote UE 300 performs measurement and generates shared information based on the measurement result to share with other remote UE 300 in the vicinity in a case where the remote UE 300 is selected as a representative, and accepts sharing of the shared information from other remote UE 300 in the vicinity selected as a representative in a case where the remote UE 300 is not selected as a representative. This makes it possible to suppress the overall power consumed by the plurality of pieces remote UE that has shared information. Note that the plurality of pieces of the remote UE 300 in the vicinity is a plurality of pieces of the remote UE 300 located in a range where similar measurement results are obtained. Specifically, the plurality of pieces of the remote UE 300 in the vicinity is a plurality of pieces of the remote UE 300 that satisfies a predetermined condition such as being owned by the same owner, having the same mobility without changing in relative position, or being located within a predetermined distance from each other.

Meanwhile, the base station 100 and the relay UE 200 mediate sharing of the shared information generated on the basis of the measurement result by the remote UE 300 selected as a representative, with the remote UE 300 not selected as a representative, among the plurality of pieces of the remote UE 300 located in the vicinity of each other. This realizes information sharing between the remote UE 300 selected as a representative and the other pieces of the remote UE 300.

In this manner, the measurement result by a part of the remote UE 300 among the plurality of pieces of the remote UE 300 is shared with the other pieces of the remote UE 300. Accordingly, it is possible to reduce the number of times of measurement in the entire plurality of pieces of the remote UE and to suppress the overall consumed power owing to the reduction.

The remote UE 300 taking on the role of representative is also referred to as representative remote UE 300. The remote UE 300 is simply referred to as a representative in some cases. Furthermore, a plurality of pieces of the remote UE 300 in the vicinity is also referred to as a remote UE group. The representative is selected from among the remote UE group and the measurement result is shared.

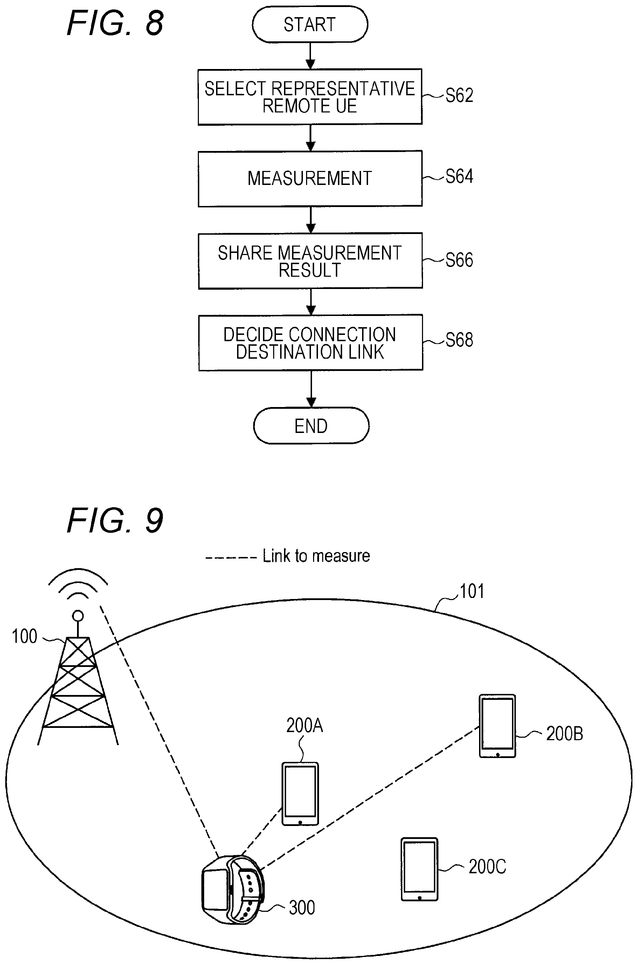

Hereinafter, an example of the flow of a process relating to sharing of the measurement result will be described with reference to Fig. 8.

Fig. 8 is a flowchart illustrating an example of the flow of a measurement process executed in the remote UE group according to the present embodiment. The process illustrated in Fig. 8 is assumed to be executed by a remote UE group made up of a plurality of pieces of the remote UE 300 located in the vicinity. As illustrated in Fig. 8, the remote UE group selects representative remote UE 300 (step S62). Subsequently, the representative remote UE 300 performs measurement (step S64) and shares the measurement result with other remote UE 300 included in the remote UE group (step S66). Then, the plurality of pieces of the remote UE 300 included in the remote UE group individually decides connection destination links (step S68).

Note that, although Fig. 8 illustrates an example in which the connection destination link is decided after the measurement result is shared, the present technology is not limited to such an example. For example, after the connection destination link based on the measurement result is decided, the result of the decision may be shared.

### (1) Selection of Representative Remote UE 300

The remote UE 300 selected to take on the role of representative comes to work as the representative remote UE 300. Hereinafter, the selection of the representative remote UE 300 will be described.

### • Selecting Subject

First, the selecting subject of the representative remote UE 300 will be described.

The representative remote UE 300 may be selected on the basis of an instruction from the base station 100 or the relay UE 200. The instruction from the base station 100 can be transmitted using radio resource control (RRC) signaling, downlink control information (DCI), or system information (for example, system information block (SIB)). Furthermore, the instruction from the relay UE 200 can be transmitted using SA or data packet.

The representative remote UE 300 may be selected in turns. For example, the timer is set and a piece of the remote UE 300 takes on the role of representative until the timer expires; after the expiration, the next piece of the remote UE 300 takes on the role of representative. The timer and the turn order may be notified or set in advance by the base station 100, or may be notified by the relay UE 200, or may be set by the remote UE 300.

The remote UE 300 may become a representative voluntarily. For example, the remote UE 300 voluntarily becomes a representative by transmitting a request to the base station 100 or the relay UE 200 and being approved. In a case where one or more pieces of the remote UE 300 included in the same remote UE group transmit requests for becoming a representative, the base station 100 or the relay UE 200 decides whether or not to approve the requests. Only one piece of the remote UE 300 may be approved as a representative from the same remote UE group. For example, the remote UE 300 to be approved as a representative is decided by comparing the states of the position information, the battery information, and the like between the plurality of pieces of the remote UE 300 attempting to become a representative voluntarily. Meanwhile, a plurality of pieces of the remote UE 300 may be approved as representatives from the same remote UE group. In that case, the base station 100 or the relay UE 200 can instruct the behavior of the plurality of pieces of the remote UE 300 approved as representatives. For example, the behavior can be instructed such that the plurality of pieces of the representative remote UE 300 performs measurement at different timings from each other (for example, in turns), or selects different pieces of the remote UE 300 from each other as sharing destinations.

It may be set in advance by the base station 100 which one of the remote UE 300 is selected as a representative.

### • Selection Timing

Subsequently, selection (or reselection) timing of the representative remote UE 300 will be described.

The representative remote UE 300 may be selected periodically. For example, the selection period may be notified by the base station 100 or the relay UE 200. Furthermore, the selection period may be decided by the remote UE 300. In addition, the selection period may be set in advance by the base station 100.

The representative remote UE 300 may be selected non-periodically. For example, the representative remote UE 300 may be selected by the base station 100 or the relay UE 200 transmitting a request to select a representative. Furthermore, in a case where the current representative remote UE 300 satisfies a predetermined condition (for example, representative release criteria described later), the representative remote UE 300 may be newly selected. This predetermined condition is a condition that a difficulty is caused in continuously performing measurement as a representative, as in the release criteria described later, including the decrease in the remaining battery power, the expiration of the timer, or the leave from the cell or the leave from the currently belonging remote UE group, for example. In addition, the representative remote UE 300 may be selected X subframes after the release of representative selection occurs in the remote UE group.

### • Selection Criteria

Subsequently, selection criteria of the representative remote UE 300 will be described.

The representative may be selected on the basis of the capabilities (for example, the battery information and processing ability information (for example, computing ability and storage ability)) of each piece of the remote UE 300 included in the remote UE group. For example, the remote UE 300 having higher remaining battery power and higher processing ability is selected as a representative.

The representative may be selected on the basis of geolocation information of each piece of the remote UE 300 included in the remote UE group. For example, the remote UE 300 located at a point where measurement is easier is selected as a representative.

The representative may be selected on the basis of relative position information of each piece of the remote UE 300 included in the remote UE group. For example, the remote UE 300 located nearer to the center of the remote UE group is selected as a representative.

The representative may be selected on the basis of the link quality with the base station 100 and/or the relay UE 200 of each piece of the remote UE 300 included in the remote UE group. For example, the remote UE 300 with the best, worst, near average, or median link quality is selected as a representative.

The representative may be selected on the basis of security requirements of each piece of the remote UE 300 included in the remote UE group. For example, the remote UE 300 having the highest security requirements is selected as a representative.

The representative may be selected on the basis of the association information of each piece of the remote UE 300 included in the remote UE group. For example, one piece of the representative remote UE 300 may be selected from among a plurality of pieces of the remote UE 300 having an association relationship with the same relay UE 200.

### (2) Release of Representative Selection

The representative selection can be released. The representative remote UE 300 that has taken on the role of representative comes to work as non-representative usual remote UE 300 once the selection as the representative is released. Hereinafter, the release of representative selection will be described.

### • Releasing Subject

First, the representative selection releasing subject will be described.

The representative selection may be released on the basis of an instruction from the base station 100 or the relay UE 200.

The representative selection may be released by the representative remote UE 300 for itself.

### • Release Timing

Subsequently, the representative selection release timing will be described.

The representative selection may be released periodically. The release period may be notified by the base station 100 or the relay UE 200. Furthermore, the release period may be decided by the remote UE 300. In addition, the release period may be set in advance by the base station 100.

The representative selection may be released non-periodically. For example, at a timing when the base station 100 or the relay UE 200 transmits a request to select a representative, the selection of the representative that the current representative remote UE 300 is responsible for may be released. For example, in a case where the current representative remote UE 300 satisfies a predetermined condition (for example, the representative release criterion described later), the representative selection may be released. This predetermined condition is a condition that a difficulty is caused in continuously performing measurement as a representative, as in the release criteria described later, including the decrease in the remaining battery power, the expiration of the timer, or the leave from the cell or the leave from the currently belonging remote UE group, for example.

### • Release Criteria

Subsequently, the representative selection release criteria will be described.

The representative selection may be released on the basis of the capabilities (for example, the battery information and processing ability information (for example, computing ability and storage ability)) of the representative remote UE 300. For example, in a case where the remaining battery power and the processing ability of the representative remote UE 300 become equal to or less than thresholds, the representative selection is released.

The representative selection may be released on the basis of the elapsed time since the representative remote UE 300 was selected. For example, in a case where a predetermined timer has expired since the representative remote UE 300 was selected, the representative selection is released.

The representative selection may be released on the basis of geolocation information of the representative remote UE 300 and the predicted future position thereof. For example, in a case where it is predicted that the representative remote UE 300 is located at a point where measurement is difficult, has left the cell, or could be located at such a point in the future, the representative selection is released.

The representative selection may be released on the basis of relative position information of the representative remote UE 300 with respect to the other pieces of the remote UE 300 included in the same remote UE group. For example, in a case where the position of the representative remote UE 300 moves away from the other pieces of the remote UE 300, the representative selection is released.

The representative selection may be released on the basis of the link quality of the representative remote UE 300 with the base station 100 and/or the relay UE 200. For example, in a case where the link quality of the representative remote UE 300 with the base station 100 and/or the relay UE 200 becomes worse than a threshold, the representative selection is released.

The representative selection may be released on the basis of security requirements of the representative remote UE 300. For example, in a case where a difficult situation to satisfy the security requirements of the representative remote UE 300 is brought about, the representative selection is released.

### (3) Sharing of Measurement Result

### • Information to be Shared

The shared information can include diverse types of information.

For example, the shared information may include the measurement result.

Furthermore, the shared information may include the decision result for the connection destination link, which has been made on the basis of the measurement result. The decision result includes, for example, the connection destination link and identification information of the connection destination base station 100 or relay UE 200.

In addition, the shared information may include information indicating the state of the representative remote UE 300. Examples of the information indicating the state of the representative remote UE 300 include a user identifier (UID), the geolocation information, the battery information, identification information of the relay UE 200 having an association relationship, an ID of a cell being connected, information indicating the current communication state with the relay UE 200 or base station 100, and the like.

Furthermore, the shared information may include information indicating the effective time interval of the measurement result. For example, the measurement result may be effective until X subframes after the measurement is performed.

In addition, the shared information may include the amount of change from information shared last time. For example, the shared information may include the amount of decrease or improvement from RSRP shared last time.

### • Sharing Path

The sharing path can be considered in a variety of ways.

The sharing path may include only sidelinks. For example, the shared information is shared from the representative remote UE 300 to the other pieces of the remote UE 300 via the relay UE 200.

The sharing path may include only Uu links (in other words, the uplink and downlink). For example, the shared information is shared from the representative remote UE 300 to the other pieces of the remote UE 300 via the base station 100.

The sharing path may include sidelinks and Uu links (in other words, the uplink and downlink). For example, the shared information may be shared from the representative remote UE 300 to the other pieces of the remote UE 300 via the base station 100 and subsequently the relay UE 200. Furthermore, the shared information may be shared, for example, from the representative remote UE 300 to the other pieces of the remote UE 300 via the relay UE 200 and subsequently the base station 100. In addition, the shared information may be shared, for example, from the representative remote UE 300 to the other pieces of the remote UE 300 via a first piece of the relay UE 200, subsequently the base station 100, and moreover a second piece of the relay UE 200.

After receiving the shared information, the apparatus on the sharing path (the base station 100 or the relay UE 200) decides when and how to transfer the shared information to which one of the remote UE 300 (for example, whether to transmit directly or transmit further by way of another apparatus).

### • Sharing Timing

The sharing timing can be considered in a variety of ways.

The shared information may be shared periodically. For example, the sharing period may be notified by the base station 100 or the relay UE 200. Furthermore, the sharing period may be set in advance by the base station 100.

The shared information may be shared non-periodically. For example, the shared information may be shared X subframes after the measurement is performed. Note that X may be a predetermined value, or may be notified by the base station 100 or the relay UE 200. In addition, the representative remote UE 300 may share the shared information at a timing when a sharing request from the relay UE 200 or the base station 100 is received.

### <<4. Working Examples>>

### <4.1. First Working Example>

This working example relates to resource setting according to the presence or absence of the association relationship.

Fig. 9 is a diagram for explaining the first working example. As illustrated in Fig. 9, the base station 100 administers a cell 101, and the relay UE 200 (200A to 200C) and the remote UE 300 are located in the coverage of the base station 100.

The remote UE 300 is assumed to be connected to the base station 100, have an association relationship with the relay UE 200A and the relay UE 200B, and have no association relationship with the relay UE 200C. However, it is assumed that the remote UE 300 is not communicating with any one of the relay UE 200 having an association relationship.

The association information is used for allocation of sidelink resources. Resource setting for discovery announcement and monitoring is made for the relay UE 200 and the remote UE 300 on the basis of the association information. The resource setting is notified, or dynamically adjusted, or made in advance by the base station 100. For example, the resource setting may be made by the base station 100 when each of the piece of the remote UE 300 and the three pieces of the relay UE 200 connects to the base station 100.

Furthermore, the association information is used for measurement. Note that downlink and sidelink BLERs are assumed as evaluation criteria for measurement.

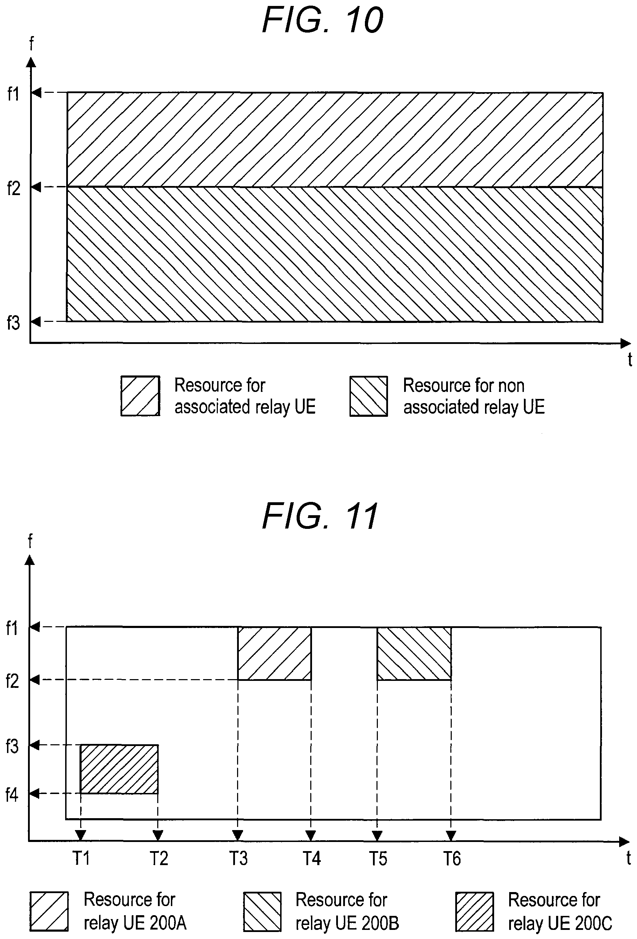

Hereinafter, an example of resource setting and measurement in the situation illustrated in Fig. 9 will be described with reference to Figs. 10 and 11.

Fig. 10 is a diagram for explaining an example of resource setting and measurement in this working example. In the example illustrated in Fig. 10, different resource pools are set according to whether or not there is an association relationship. A resource pool for the relay UE having an association relationship ranges from frequencies f1 to f2, while a resource pool for the relay UE having no association relationship ranges from frequencies f2 to f3. The relay UE 200A and the relay UE 200B having an association relationship with the remote UE 300 perform sidelink discovery using the frequencies f1 to f2. Meanwhile, the relay UE 200C having no association relationship with the remote UE 300 performs sidelink discovery using the frequencies f2 to f3. In this case, the remote UE 300 is only required to monitor the frequencies f1 to f2 solely. With this configuration, since the remote UE 300 does not need to monitor the frequencies f2 to f3, consumed power is suppressed.

Note that, although Fig. 10 illustrates an example of frequency division duplex (FDD), similar setting may be made in the case of time division duplex (TDD).

Fig. 11 is a diagram for explaining an example of resource setting and measurement in this working example. In the example illustrated in Fig. 11, resources (for example, resource blocks) with fine granularity compared to the resource pool are dedicatedly allocated to individual pieces of the relay UE 200. It is assumed that the remote UE 300 is notified of information indicating a resource allocated to each piece of the relay UE 200 from the base station 100. In this case, the remote UE 300 measures only the resource dedicatedly allocated to each of the relay UE 200A and the relay UE 200B. With this configuration, the remote UE 300 can suppress resources to measure to minimum, and consumed power is thus suppressed.

### <4.2. Second Working Example>

This working example relates to resource setting according to the presence or absence of the association relationship.

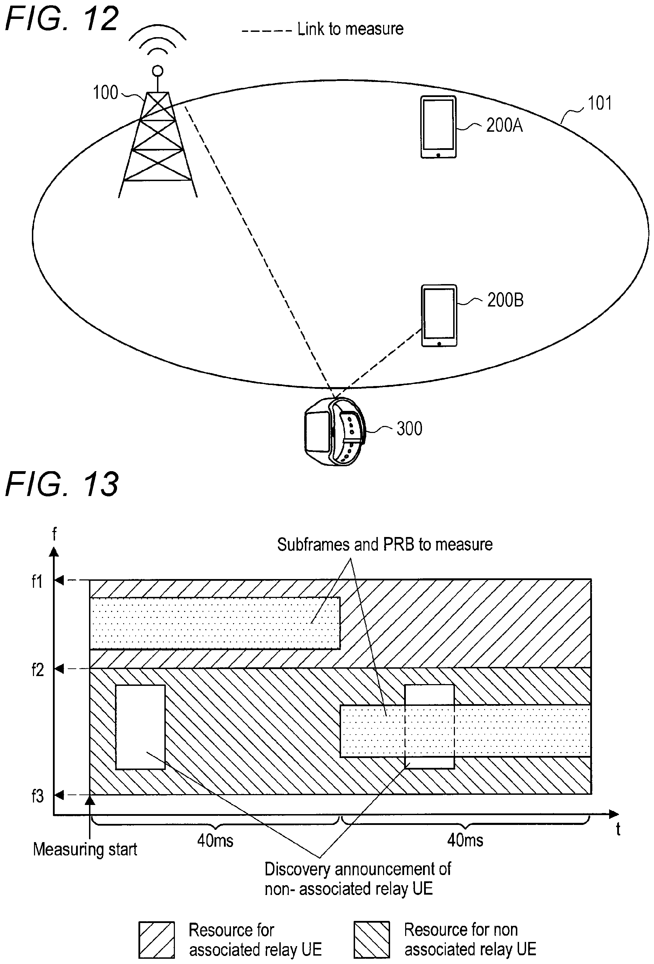

Fig. 12 is a diagram for explaining the second working example. As illustrated in Fig. 12, the base station 100 administers the cell 101, and the relay UE 200A and the relay UE 200B are located in the coverage of the base station 100, while the remote UE 300 is located out of the coverage. However, it is assumed that the relay UE 200A is far from the remote UE 300, and communication is difficult.

The remote UE 300 is assumed to be connected to the base station 100 and have an association relationship with the relay UE 200A, but have no association relationship with the relay UE 200B. However, it is assumed that the remote UE 300 is not communicating with any one of the relay UE 200 having an association relationship.

Also in this working example, as in the first working example, the association information is used for allocation and measurement of sidelink resources. An example of this procedure will be described with reference to Fig. 13.

Fig. 13 is a diagram for explaining an example of resource setting and measurement in this working example. In the example illustrated in Fig. 13, different resource pools are set according to whether or not there is an association relationship. A resource pool for the relay UE having an association relationship ranges from frequencies f1 to f2, while a resource pool for the relay UE having no association relationship ranges from frequencies f2 to f3. Therefore, the relay UE 200A performs discovery announcement for the frequencies f1 to f2, and the relay UE 200B performs discovery announcement for the frequencies f2 to f3.

For example, it is assumed that a 40 ms timer is set in advance. First, the remote UE 300 performs measurement for subframes and a physical resource block (PRB) in the frequencies f1 to f2, which are a resource pool allocated to the relay UE 200A having an association relationship. However, it is assumed that 40 ms has elapsed without detection of discovery announcement from the relay UE 200A. In response to this, the remote UE 300 switches the frequency to measure. In detail, the remote UE 300 performs measurement for subframes and PRB in the frequencies f2 to f3, which are a resource pool allocated to the relay UE 200B having no association relationship. Consequently, the remote UE 300 will be successful in detection of discovery announcement from the relay UE 200B.

### <4.3. Third Working Example>

This working example relates to a specific example of implementation/non-implementation of measurement skipping.

The contents of each scenario in this working example are illustrated in Table 1 below.

### [Table 1]

**Table 1. Contents of Each Scenario of Third Working Example**

| Scenario | Current link | Link performance (BLER) | Measurement Request |
|---|---|---|---|
| 1 | With associated relay | 0.5% | Not Accepted |
| 2 | With associated relay | 0.5% | Accepted |
| 3 | With associated relay | 10% | Not Accepted |
| 4 | Not with associated relay | 0.5% | Accepted |
| 5 | Not with associated relay | 0.5% | Not Accepted |
| 6 | Not with associated relay | 10% | Accepted |
| 7 | Not with associated relay | 10% | Not Accepted |

The link performance (in other words, the link quality) is assumed to be evaluated by BLER. Note that the smaller the BLER, the better, and the larger the BLER, the worse. For example, it is assumed that the remote UE 300 ascertains that the link quality is good when BLER is smaller than 1%, and evaluates that communication is possible on the ascertained link.

Scenario 1 will be described. The remote UE 300 is in communication with the relay UE 200 having an association relationship. Furthermore, the link quality is good because BLER is 1% or less. In addition, the remote UE 300 has not accepted a measurement request. Therefore, the remote UE 300 skips the measurement of other links.

Scenario 2 will be described. The remote UE 300 is in communication with the relay UE 200 having an association relationship. Furthermore, the link quality is good because BLER is 1% or less. However, the remote UE 300 has accepted a measurement request. Therefore, the remote UE 300 measures another link.

Scenario 3 will be described. The mote UE 300 is in communication with the relay UE 200 having an association relationship. Furthermore, the remote UE 300 has not accepted a measurement request. However, the link quality is bad because BLER is 1% or more. Therefore, the remote UE 300 measures another link.

Scenarios 4 to 7 will be described. The remote UE 300 is in communication with the relay UE 200 having no association relationship. Therefore, the remote UE 300 measures another link regardless of the link quality and the presence or absence of the measurement request.

### <4.4. Fourth Working Example>

This working example relates to a specific example of a subject that decides a connection destination link.

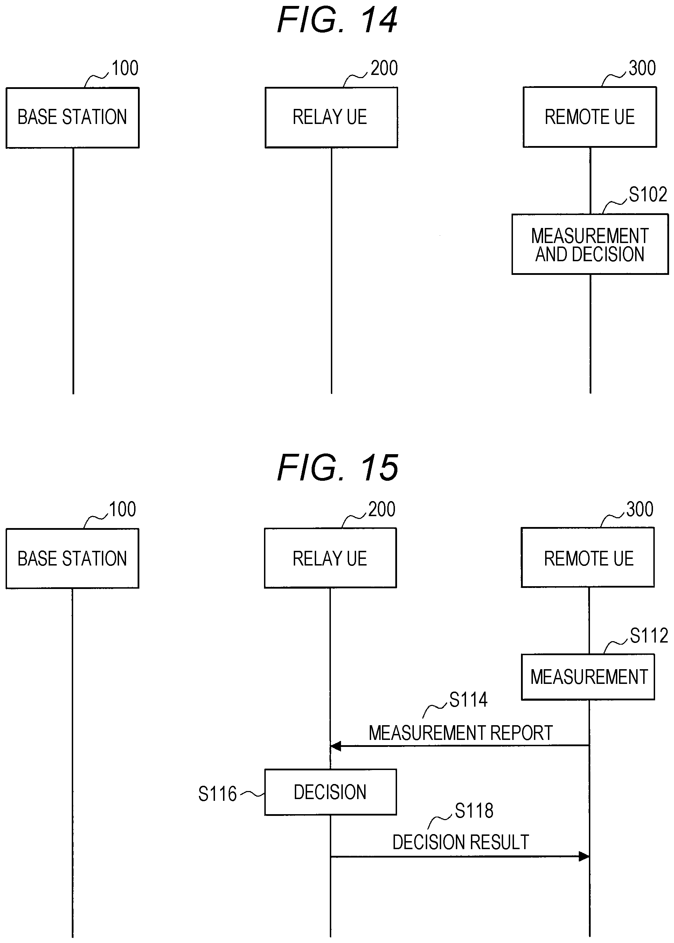

As described below with reference to Figs. 14 to 18, the deciding subject can be performed by either the base station 100, the relay UE 200, or the remote UE 300.

Fig. 14 is a sequence diagram for explaining a first scenario of this working example. As illustrated in Fig. 14, in this scenario, the remote UE 300 performs measurement and decision (in other words, decision on the connection destination link) (step S102). Note that the decision criteria for the connection destination link, such as a threshold, are assumed to be set in advance. In this manner, the remote UE 300 may perform decision.

Fig. 15 is a sequence diagram for explaining a second scenario of this working example. In this scenario, it is assumed that the remote UE 300 can communicate with the relay UE 200. For example, the remote UE 300 is connected to the relay UE 200, or connected to the relay UE 200 and the remote UE 300 in the coverage. As illustrated in Fig. 15, first, the remote UE 300 performs measurement (step S112) and transmits a measurement report including the measurement result to the relay UE 200 (step S114). Then, the relay UE 200 performs decision (step S116) and transmits the decision result to the remote UE 300 (step S118). In this manner, the relay UE 200 may perform decision.

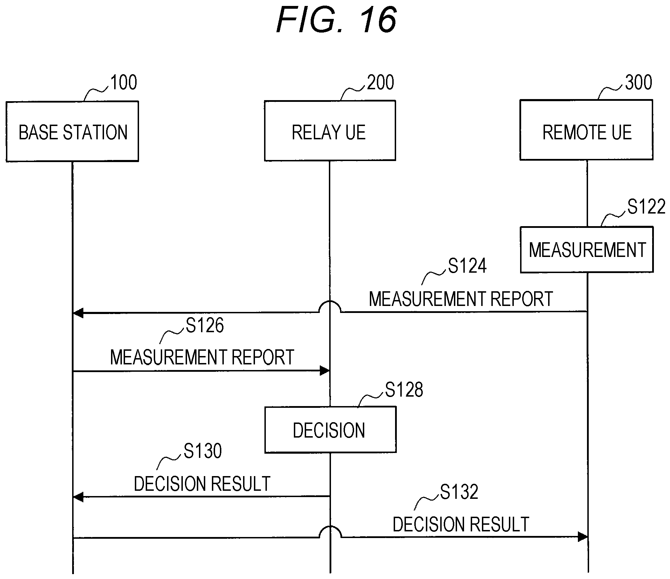

Fig. 16 is a sequence diagram for explaining a third scenario of this working example. In this scenario, it is assumed that the remote UE 300 can communicate with the base station 100. As illustrated in Fig. 16, first, the remote UE 300 performs measurement (step S122) and transmits a measurement report including the measurement result to the relay UE 200 via the base station 100 (steps S124 and S126). Then, the relay UE 200 performs decision (step S128) and transmits the decision result to the remote UE 300 via the base station 100 (steps S130 and S132). In this manner, the relay UE 200 may perform decision.

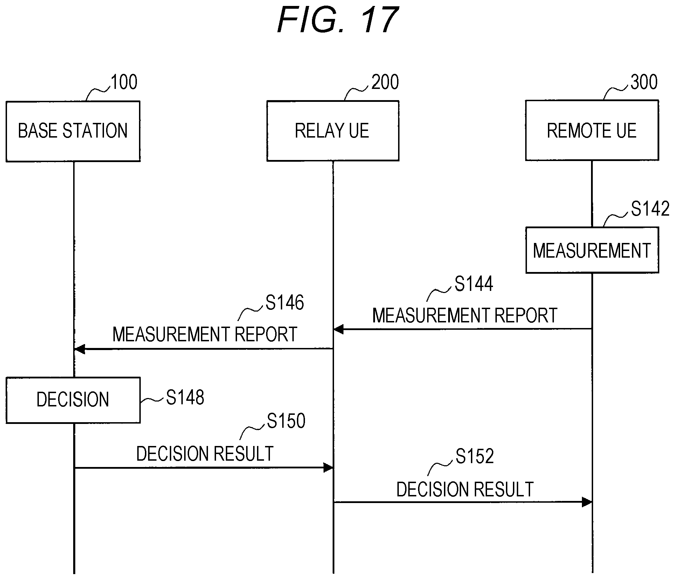

Fig. 17 is a sequence diagram for explaining a fourth scenario of this working example. In this scenario, it is assumed that the remote UE 300 can communicate with the relay UE 200. For example, the remote UE 300 is connected to the relay UE 200, or connected to the relay UE 200 and the remote UE 300 in the coverage. As illustrated in Fig. 17, first, the remote UE 300 performs measurement (step S142) and transmits a measurement report including the measurement result to the base station 100 via the relay UE 200 (steps S144 and S146). Then, the base station 100 performs decision (step S148) and transmits the decision result to the remote UE 300 via the relay UE 200 (steps S150 and S152). In this manner, the base station 100 may perform decision.

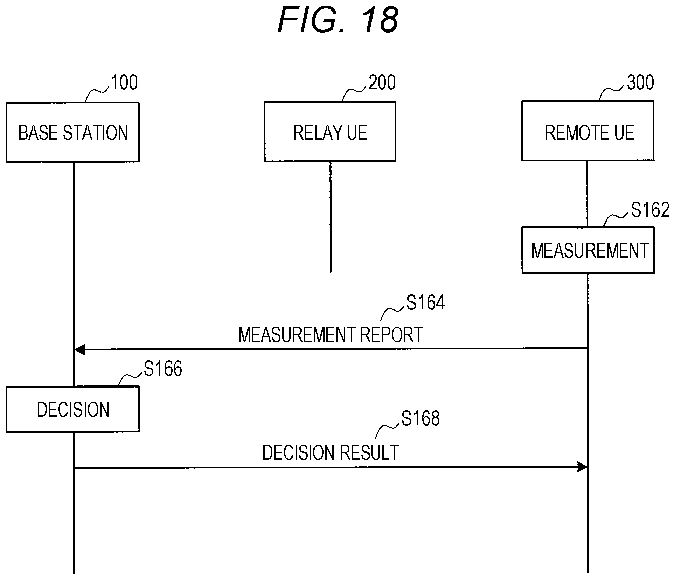

Fig. 18 is a sequence diagram for explaining a fifth scenario of this working example. In this scenario, it is assumed that the remote UE 300 can communicate with the base station 100. As illustrated in Fig. 18, first, the remote UE 300 performs measurement (step S162) and transmits a measurement report including the measurement result to the base station 100 (step S164). Then, the base station 100 performs decision (step S166) and transmits the decision result to the remote UE 300 (step S168). In this manner, the base station 100 may perform decision.

### <4.5. Fifth Working Example>

This working example relates to the priority order of the connection destination links.

The contents of each scenario in this working example are illustrated in Table 2 below.

### [Table 2]

**Table 2. Contents of Each Scenario of Fifth Working Example**

| Measurement result | Decision result | Uu link performance (BLER) | Sidelink performance with associated relay (BLER) | X | Sidelink performance with non-associated relay (BLER) |
|---|---|---|---|---|---|
| 1 | link with associated relay | 3% | 1% | NA | 1% |
| 2 | link with associated relay | 3% | 5% | 1.02 | 1% |
| 3 | Link with eNB | 1% | 30% | 1.41 | 1% |
| 4 | Link with eNB | 5% | 40% | NA | 1% |
| 5 | Link with non associated relay | 20% | 40% | NA | 10% |

Hereinafter, the decision on the connection destination link in a case where first to fifth measurement results illustrated in Table 2 above are obtained will be described. A threshold for Uu link BLER is assumed as 10%, and a threshold for sidelink BLER is assumed 30%. Furthermore, it is assumed that the threshold θ for the magnification X in which the quality of the Uu link is better than the quality of the sidelink is assumed as 1.2.

According to the first measurement result, sidelink BLER with the relay UE 200 having an association relationship is equal to or less than the threshold. Furthermore, although Uu link BLER is also equal to or less than the threshold, sidelink BLER is better than Uu link BLER. Accordingly, the remote UE 300 connects to the relay UE 200 having an association relationship.

According to the second measurement result, sidelink BLER with the relay UE 200 having an association relationship and Uu link BLER are equal to or less than the thresholds. Meanwhile, sidelink BLER with the relay UE 200 having an association relationship is 1.02 times Uu link BLER. However, a magnification of 1.02 is equal to or less than the threshold θ. Accordingly, the remote UE 300 connects to the relay UE 200 having an association relationship.

According to the third measurement result, sidelink BLER with the relay UE 200 having an association relationship and Uu link BLER are equal to or less than the thresholds. Meanwhile, sidelink BLER with the relay UE 200 having an association relationship is 1.41 times Uu link BLER. Then, a magnification of 1.02 exceeds the threshold θ. Accordingly, the remote UE 300 connects to the base station 100.

According to the fourth measurement result, sidelink BLER with the relay UE 200 having an association relationship is equal to or greater than the threshold. On the other hand, Uu link BLER is equal to or less than the threshold. Accordingly, the remote UE 300 connects to the base station 100.

According to the fifth measurement result, sidelink BLER with the relay UE 200 having an association relationship and Uu link BLER are equal to or greater than the thresholds. On the other hand, sidelink BLER with the relay UE 200 having no association relationship is equal to or less than the threshold. Accordingly, the remote UE 300 connects to the relay UE 200 having no association relationship.

### <4.6. Sixth Working Example>

This working example relates to the selection of the remote UE 300 that takes on the role of representative.

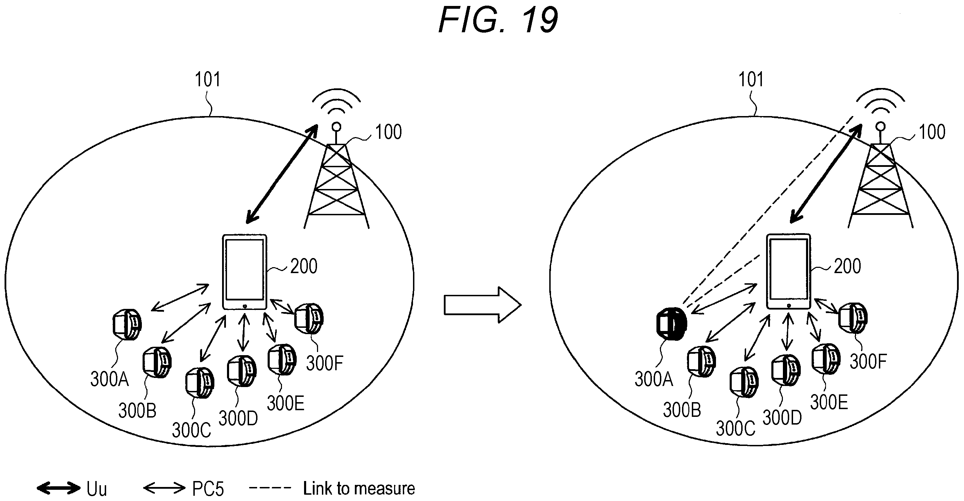

Fig. 19 is a diagram for explaining this working example. As illustrated in the left diagram of Fig. 19, the base station 100 administers the cell 101, and the relay UE 200 is located in the coverage of the base station 100. Then, six pieces of the remote UE 300 (300A to 300F) are located in the vicinity of each other around the relay UE 200. It is assumed here that the relay UE 200 decides which one of the remote UE 300 takes on the role of representative. Additionally, the decision criterion is assumed as the remaining battery power. An example of the remaining battery power of each piece of the remote UE 300 is illustrated in Table 3 below.

### [Table 3]

**Table 3. Remaining Battery Power of Remote UE 300A to Remote UE 300F**

| Remote UE | A | B | C | D | E | F |
|---|---|---|---|---|---|---|
| Residual battery (%) | 100 | 10 | 30 | 15 | 20 | 70 |

In the example illustrated in Table 3 above, the remote UE 300A has the largest remaining battery power. Thus, the relay UE 200 decides the remote UE 300A as a representative, as illustrated in the right diagram of Fig. 19. The remote UE 300A measures the link quality of each of the Uu link with the base station 100 and the sidelink with the relay UE 200. Then, the remote UE 300A shares the measurement results with the other pieces of the remote UE 300 (300B to 300F) in the vicinity.

### <4.7. Seventh Working Example>

This working example relates to release of representative selection and representative reselection.

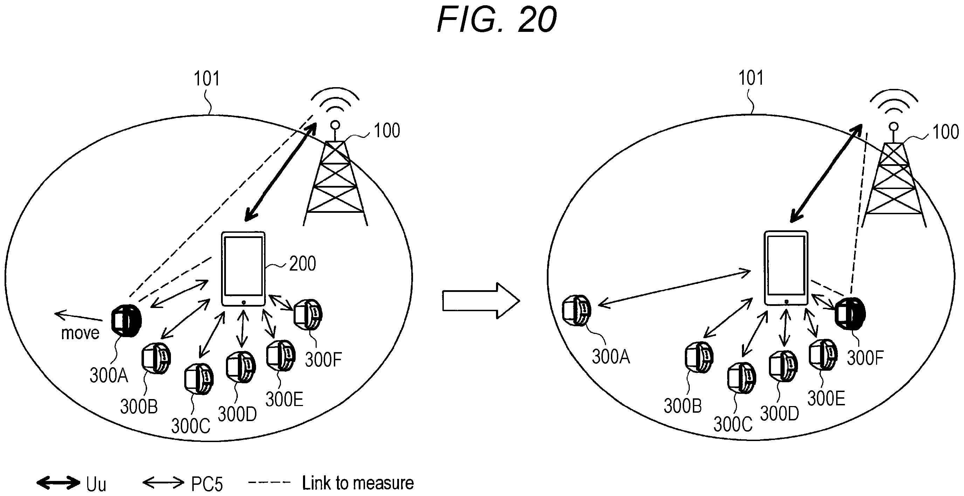

Fig. 20 is a diagram for explaining this working example. As illustrated in the left diagram of Fig. 20, a case where, in the situation illustrated in the right diagram of Fig. 19, the remote UE 300A serving as a representative has moved far from the other pieces of the remote UE 300 is assumed. In this case, there is a possibility that the measurement result of the remote UE 300A is no longer similar to measurement results in a supposed case where the other pieces of the remote UE 300 perform measurement. In response to this situation, the representative is reselected.

For example, referring to Table 3 above, the remote UE 300F has the largest remaining battery power except the remote UE 300A. Thus, the relay UE 200 decides the remote UE 300F as a representative, as illustrated in the right diagram of Fig. 20. The remote UE 300F measures the link quality of each of the Uu link with the base station 100 and the sidelink with the relay UE 200. Then, the remote UE 300F shares the measurement results with the other pieces of the remote UE 300 (300B to 300E) in the vicinity.

### <4.8. Eighth Working Example>

This working example relates to sharing of the shared information.

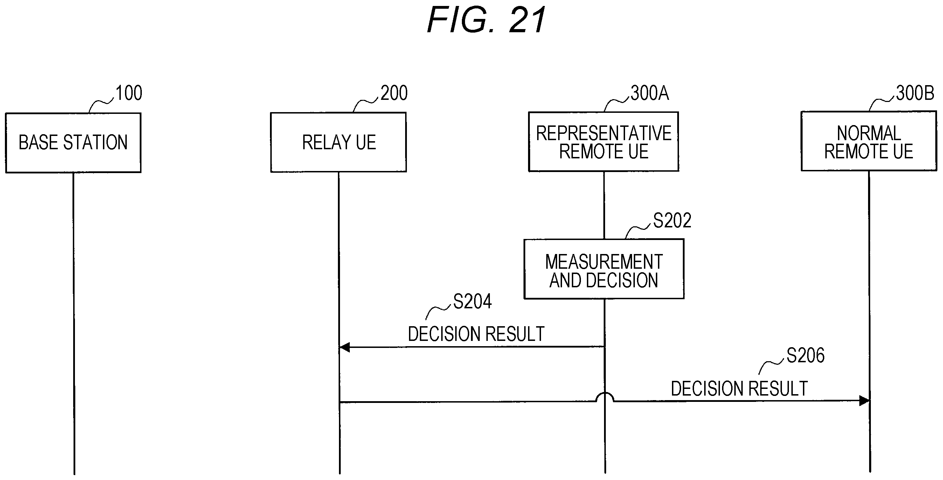

As described below with reference to Figs. 21 to 23, the shared information may be shared only by way of the sidelink. Note that normal remote UE represents remote UE that does not take on the role of representative. The representative remote UE 300A and the normal remote UE 300B are both assumed to be connected to the relay UE 200.

Fig. 21 is a sequence diagram for explaining a first scenario of this working example. As illustrated in Fig. 21, the representative remote UE 300A performs measurement and decision (in other words, decision on the connection destination link) (step S202). Then, the representative remote UE 300A transmits the decision result to the normal remote UE 300B via the relay UE 200 (steps S204 and S206). In this manner, the decision may be performed by the representative remote UE 300A.

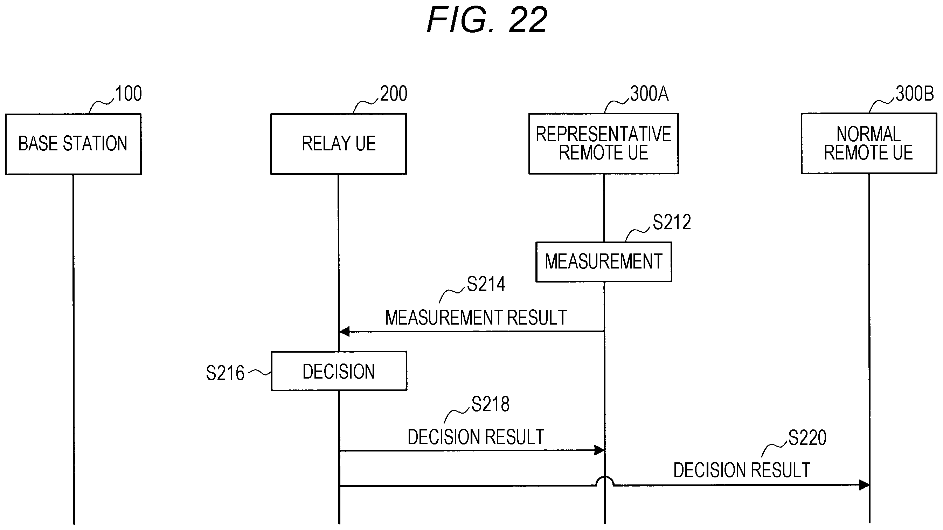

Fig. 22 is a sequence diagram for explaining a second scenario of this working example. As illustrated in Fig. 22, the representative remote UE 300A performs measurement (step S212) and transmits the measurement result to the relay UE 200 (step S214). Then, the relay UE 200 performs decision on the basis of the measurement result (step S216) and transmits the decision result to each of the representative remote UE 300A and the normal remote UE 300B (steps S218 and S220). In this manner, the decision may be performed by the relay UE 200.

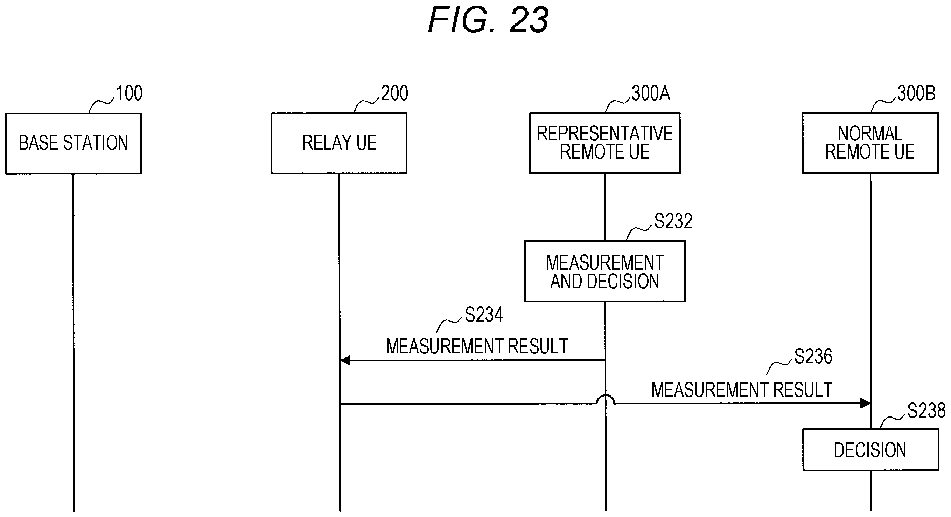

Fig. 23 is a sequence diagram for explaining a third scenario of this working example. As illustrated in Fig. 23, the representative remote UE 300A performs measurement and decision (in other words, decision on the connection destination link) (step S232). Subsequently, the representative remote UE 300A transmits the measurement result to the normal remote UE 300B via the relay UE 200 (steps S234 and S236). Then, the normal remote UE 300B performs decision on the basis of the measurement result (step S238). In this manner, the decision may be performed by both of the representative remote UE 300A and the normal remote UE 300B.

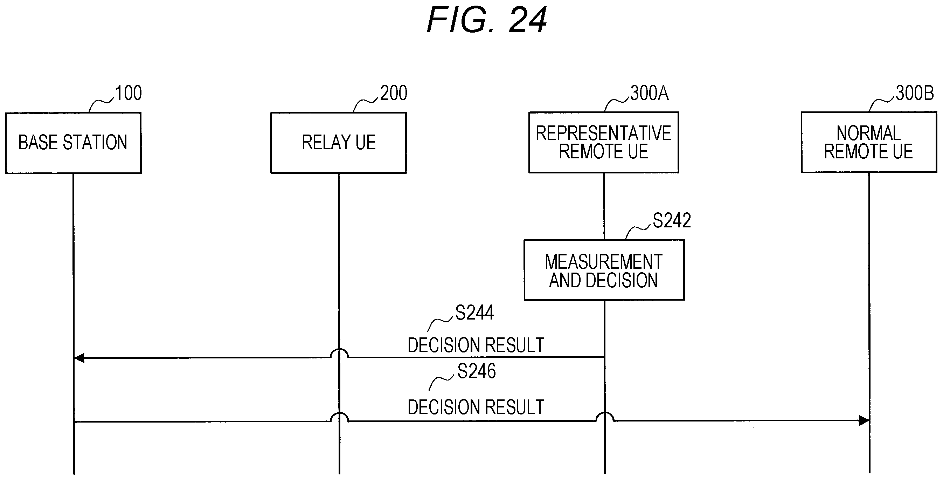

As described below with reference to Figs. 24 to 26, the shared information may be shared only by way of the Uu link. Note that the representative remote UE 300A and the normal remote UE 300B are both assumed to be connected to the base station 100.

Fig. 24 is a sequence diagram for explaining a fourth scenario of this working example. As illustrated in Fig. 24, the representative remote UE 300A performs measurement and decision (step S242). Then, the representative remote UE 300A transmits the decision result to the normal remote UE 300B via the base station 100 (steps S244 and S246). In this manner, the decision may be performed by the representative remote UE 300A.

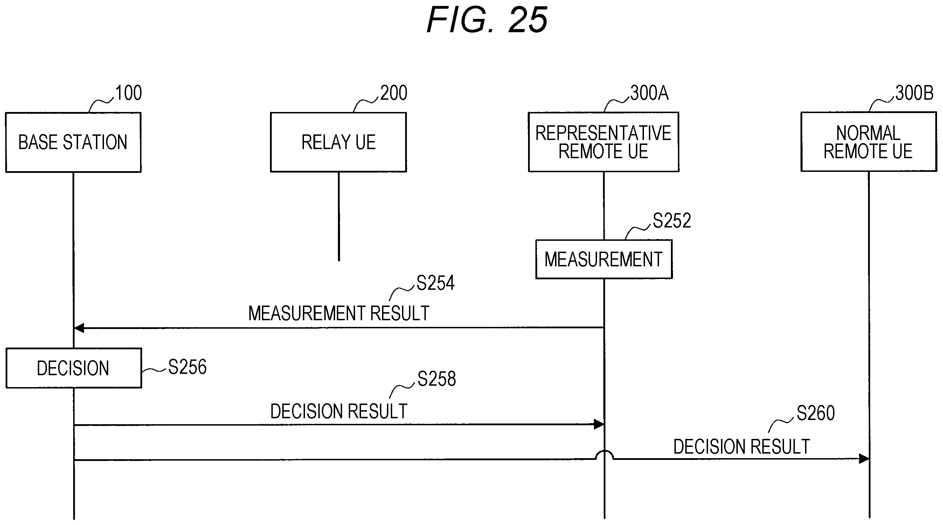

Fig. 25 is a sequence diagram for explaining a fifth scenario of this working example. As illustrated in Fig. 25, the representative remote UE 300A performs measurement (step S252) and transmits the measurement result to the base station 100 (step S254). Then, the base station 100 performs decision on the basis of the measurement result (step S256) and transmits the decision result to each of the representative remote UE 300A and the normal remote UE 300B (steps S258 and S260). In this manner, the decision may be performed by the base station 100.

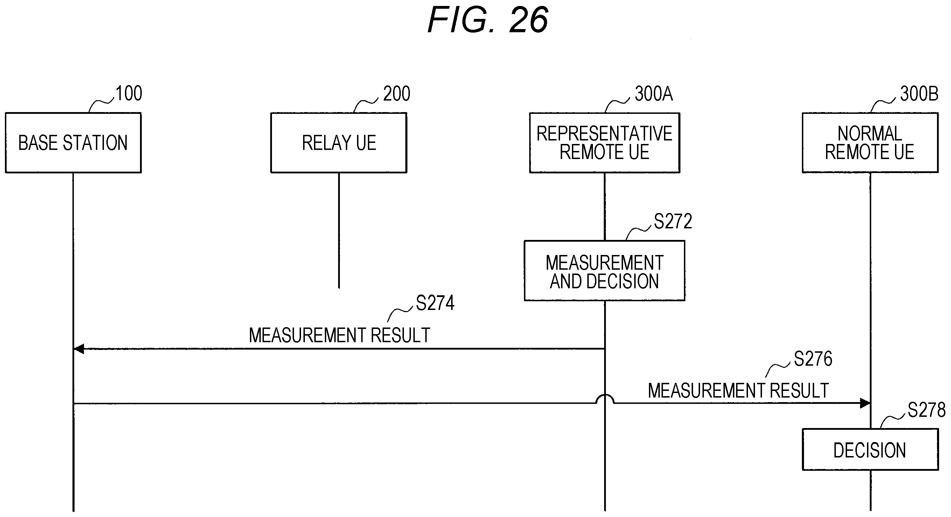

Fig. 26 is a sequence diagram for explaining a sixth scenario of this working example. As illustrated in Fig. 26, the representative remote UE 300A performs measurement and decision (step S272). Subsequently, the representative remote UE 300A transmits the measurement result to the normal remote UE 300B via the base station 100 (steps S274 and S276). Then, the normal remote UE 300B performs decision on the basis of the measurement result (step S278). In this manner, the decision may be performed by both of the representative remote UE 300A and the normal remote UE 300B.

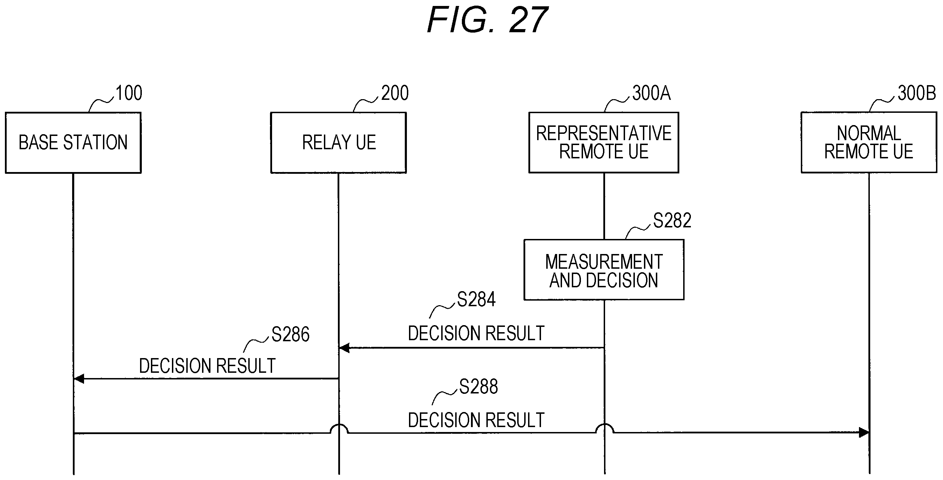

As described below with reference to Figs. 27 to 30, the shared information may be shared by way of the Uu link and the sidelink. Note that the representative remote UE 300A is assumed to be connected to the relay UE 200, while the normal remote UE 300B is assumed to be connected to the base station 100.

Fig. 27 is a sequence diagram for explaining a seventh scenario of this working example. As illustrated in Fig. 27, the representative remote UE 300A performs measurement and decision (step S282). Subsequently, the representative remote UE 300A transmits the decision result to the normal remote UE 300B via first the relay UE 200 and then the base station 100 (steps S284, S286, and S288). In this manner, the decision may be performed by the representative remote UE 300A.

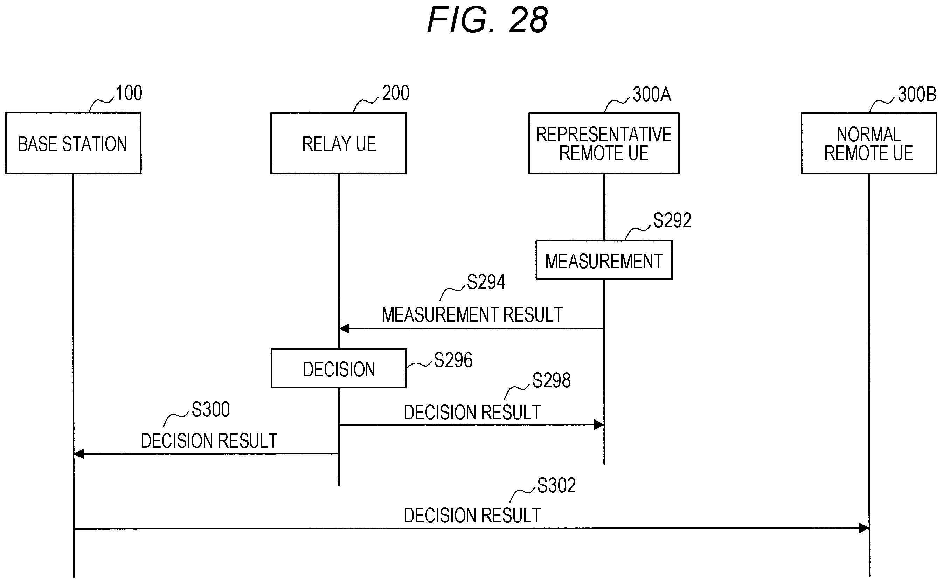

Fig. 28 is a sequence diagram for explaining an eighth scenario of this working example. As illustrated in Fig. 28, the representative remote UE 300A performs measurement (step S292) and transmits the measurement result to the relay UE 200 (step S294). Then, the relay UE 200 performs decision on the basis of the measurement result (step S296) and transmits the decision result to the representative remote UE 300A (step S298). Furthermore, the relay UE 200 transmits the decision result to the normal remote UE 300B via the base station 100 (steps S300 and S302). In this manner, the decision may be performed by the relay UE 200.

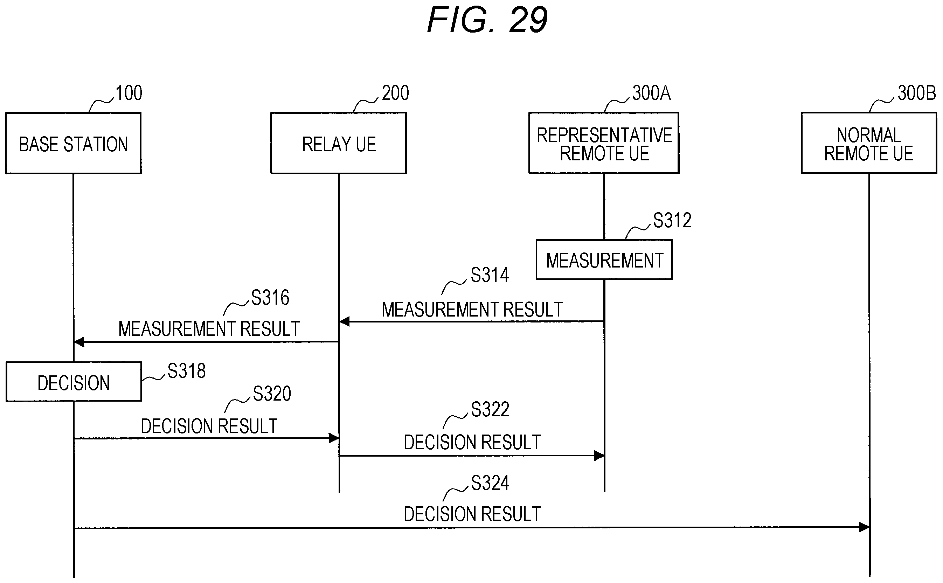

Fig. 29 is a sequence diagram for explaining a ninth scenario of this working example. As illustrated in Fig. 29, the representative remote UE 300A performs measurement (step S312) and transmits the measurement result to the base station 100 via the relay UE 200 (steps S314 and S316). Then, the base station 100 performs decision on the basis of the measurement result (step S318) and transmits the decision result to the representative remote UE 300A via the relay UE 200 (steps S320 and S322). Furthermore, the base station 100 transmits the decision result to the normal remote UE 300B (step S324). In this manner, the decision may be performed by the base station 100.

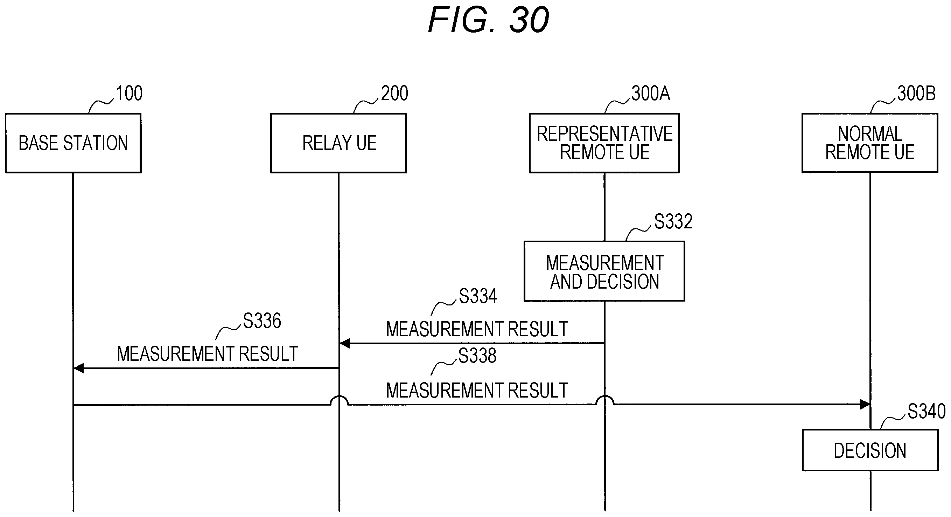

Fig. 30 is a sequence diagram for explaining a tenth scenario of this working example. As illustrated in Fig. 30, the representative remote UE 300A performs measurement and decision (step S332). Subsequently, the representative remote UE 300A transmits the measurement result to the normal remote UE 300B via first the relay UE 200 and then the base station 100 (steps S334, S336, and S338). Then, the normal remote UE 300B performs decision on the basis of the measurement result (step S340). In this manner, the decision may be performed by both of the representative remote UE 300A and the normal remote UE 300B.

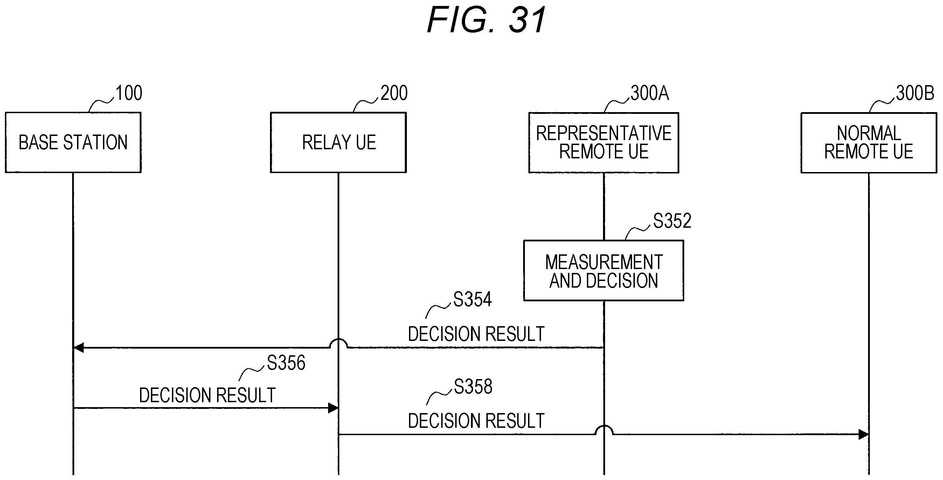

As described below with reference to Figs. 31 to 34, the shared information may be shared by way of the Uu link and the sidelink. Note that the representative remote UE 300A is assumed to be connected to the base station 100, while the normal remote UE 300B is assumed to be connected to the relay UE 200.

Fig. 31 is a sequence diagram for explaining an eleventh scenario of this working example. As illustrated in Fig. 31, the representative remote UE 300A performs measurement and decision (step S352). Subsequently, the representative remote UE 300A transmits the decision result to the normal remote UE 300B via first the base station 100 and then the relay UE 200 (steps S354, S356, and S358). In this manner, the decision may be performed by the representative remote UE 300A.

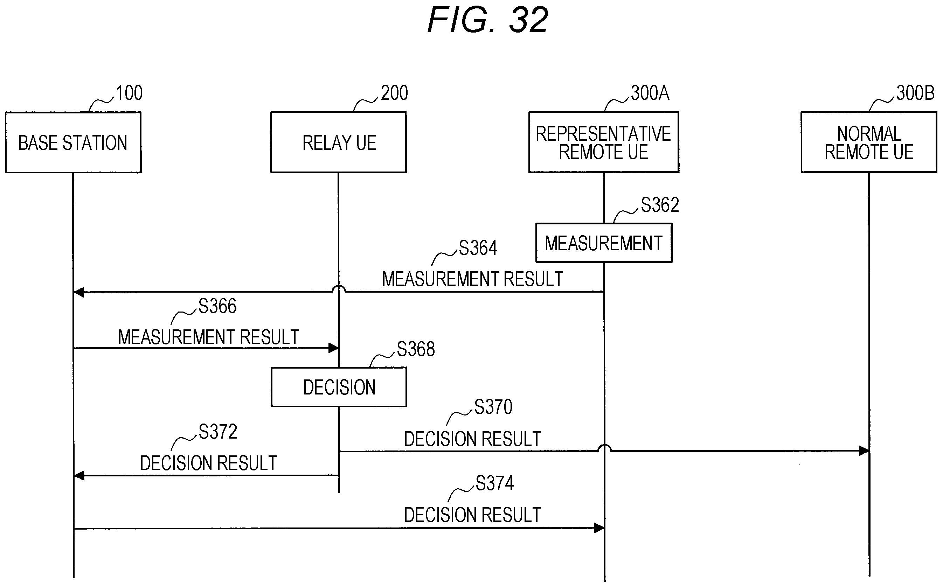

Fig. 32 is a sequence diagram for explaining a twelfth scenario of this working example. As illustrated in Fig. 32, the representative remote UE 300A performs measurement (step S362) and transmits the measurement result to the relay UE 200 via the base station 100 (steps S364 and S366). Subsequently, the relay UE 200 performs decision on the basis of the measurement result (step S368). Then, the relay UE 200 transmits the decision result to the normal remote UE 300B (step S370) and transmits the decision result to the representative remote UE 300A via the base station 100 (steps S372 and S374). In this manner, the decision may be performed by the relay UE 200.

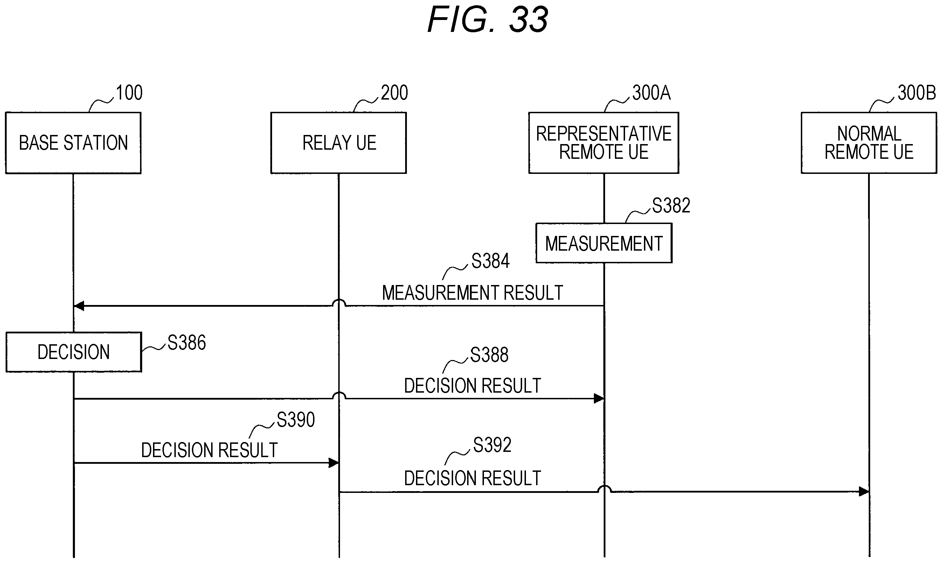

Fig. 33 is a sequence diagram for explaining a thirteenth scenario of this working example. As illustrated in Fig. 33, the representative remote UE 300A performs measurement (step S382) and transmits the measurement result to the base station 100 (step S384). Subsequently, the base station 100 performs decision on the basis of the measurement result (step S386). Then, the base station 100 transmits the decision result to the representative remote UE 300A (step S388) and transmits the decision result to the normal remote UE 300B via the relay UE 200 (steps S390 and S392). In this manner, the decision may be performed by the base station 100.

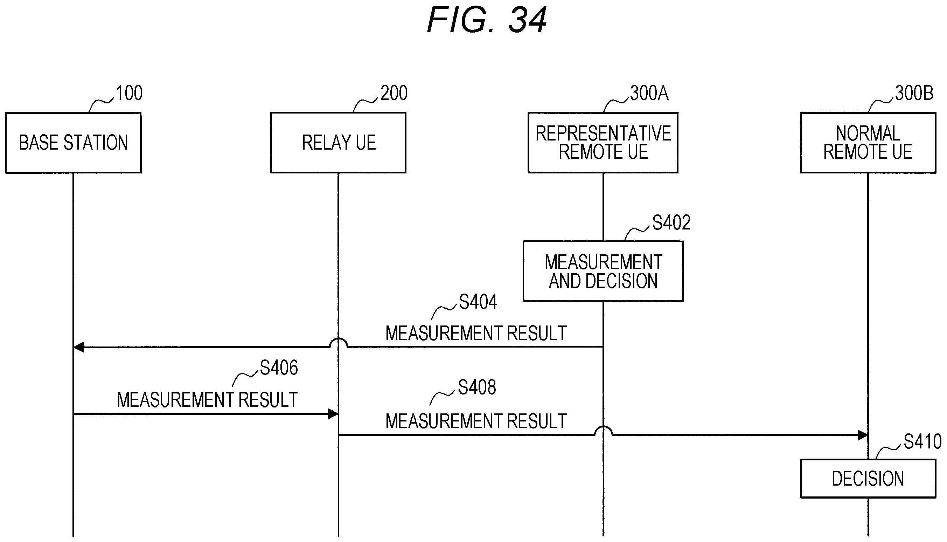

Fig. 34 is a sequence diagram for explaining a fourteenth scenario of this working example. As illustrated in Fig. 34, the representative remote UE 300A performs measurement and decision (step S402). Subsequently, the representative remote UE 300A transmits the measurement result to the normal remote UE 300B via first the base station 100 and then the relay UE 200 (steps S404, S406, and S408). Then, the normal remote UE 300B performs decision on the basis of the measurement result (step S410). In this manner, the decision may be performed by both of the representative remote UE 300A and the normal remote UE 300B.

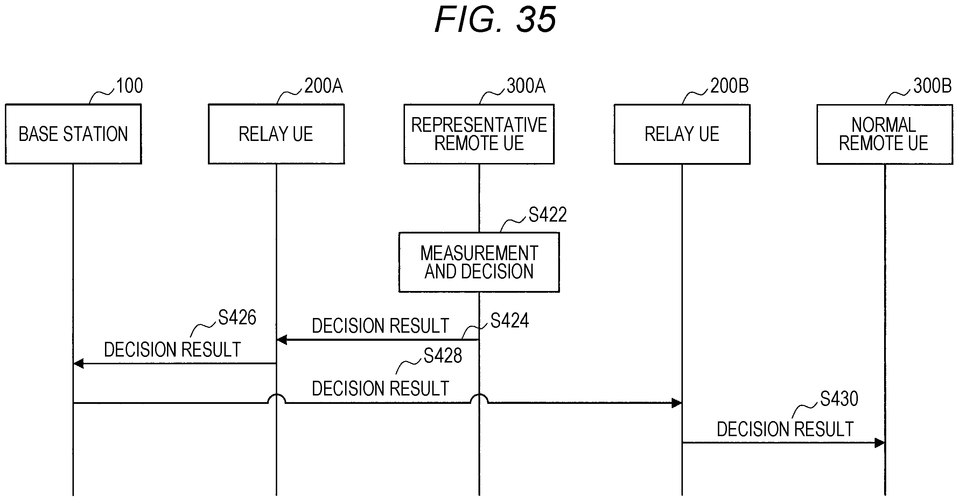

As described below with reference to Figs. 35 to 40, the shared information may be shared by way of the Uu link and the sidelink. Note that the representative remote UE 300A is assumed to be connected to the relay UE 200A, while the normal remote UE 300B is assumed to be connected to the relay UE 200B.

Fig. 35 is a sequence diagram for explaining a fifteenth scenario of this working example. As illustrated in Fig. 35, the representative remote UE 300A performs measurement and decision (step S422). Subsequently, the representative remote UE 300A transmits the decision result to the normal remote UE 300B via first the relay UE 200A, then the base station 100, and then the relay UE 200B (steps S424, S426, S428, and S430). In this manner, the decision may be performed by the representative remote UE 300A.

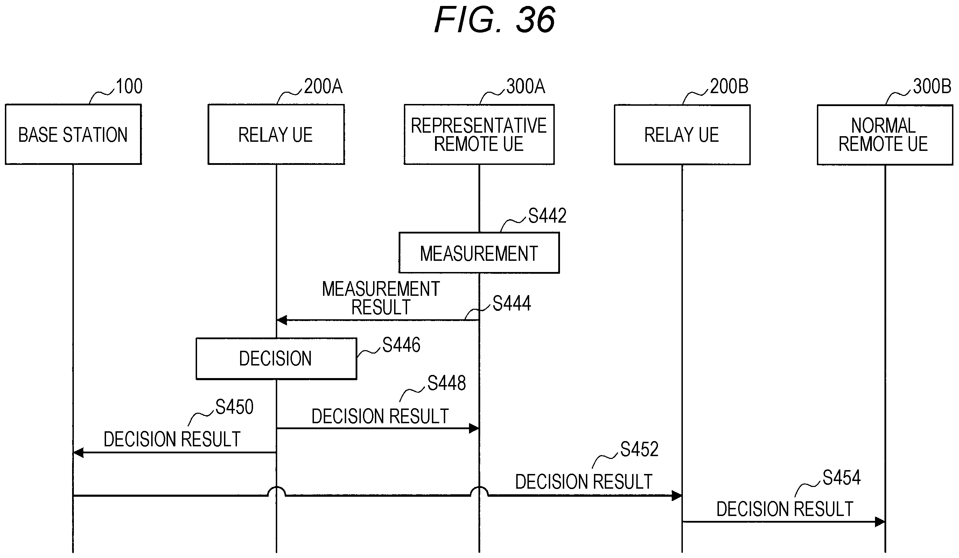

Fig. 36 is a sequence diagram for explaining a sixteenth scenario of this working example. As illustrated in Fig. 36, the representative remote UE 300A performs measurement (step S442) and transmits the measurement result to the relay UE 200A (step S444). Then, the relay UE 200A performs decision on the basis of the measurement result (step S446) and transmits the decision result to the representative remote UE 300A (step S448). Furthermore, the relay UE 200A transmits the decision result to the normal remote UE 300B via first the base station 100 and then the relay UE 200B (steps S450, S452, and S454). In this manner, the decision may be performed by the relay UE 200A.

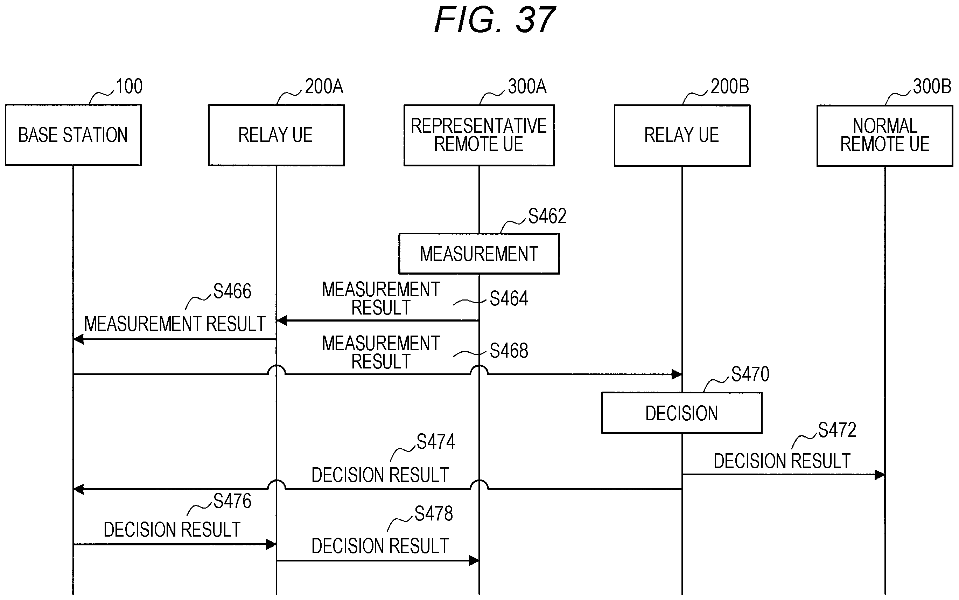

Fig. 37 is a sequence diagram for explaining a seventeenth scenario of this working example. As illustrated in Fig. 37, the representative remote UE 300A performs measurement (step S462) and transmits the measurement result to the relay UE 200B via first the relay UE 200A and then the base station 100 (steps S464, S466, and S468). Then, the relay UE 200B performs decision on the basis of the measurement result (step S470) and transmits the decision result to the normal remote UE 300B (step S472). Furthermore, the relay UE 200B transmits the decision result to the representative remote UE 300A via first the base station 100 and then the relay UE 200A (steps S474, S476, and S478). In this manner, the decision may be performed by the relay UE 200B.

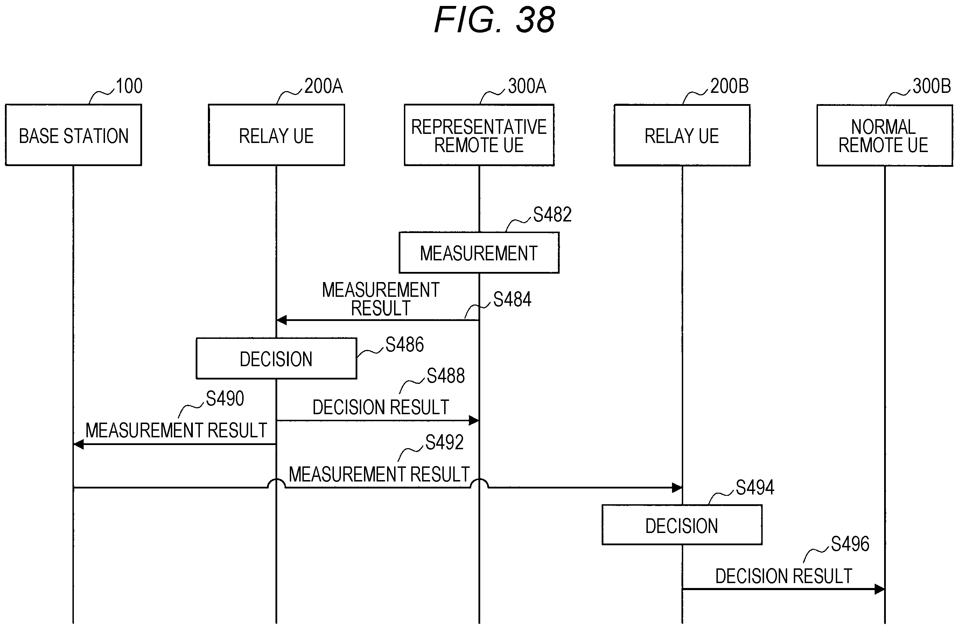

Fig. 38 is a sequence diagram for explaining an eighteenth scenario of this working example. As illustrated in Fig. 38, the representative remote UE 300A performs measurement (step S482) and transmits the measurement result to the relay UE 200A (step S484). Then, the relay UE 200A performs decision on the basis of the measurement result (step S486) and transmits the decision result to the representative remote UE 300A (step S488). Furthermore, the relay UE 200A transmits the measurement result to the relay UE 200B via the base station 100 (steps S490 and S492). Then, the relay UE 200B performs decision on the basis of the measurement result (step S494) and transmits the decision result to the normal remote UE 300B (step S496). In this manner, the decision may be performed by both of the relay UE 200A and the relay UE 200B.

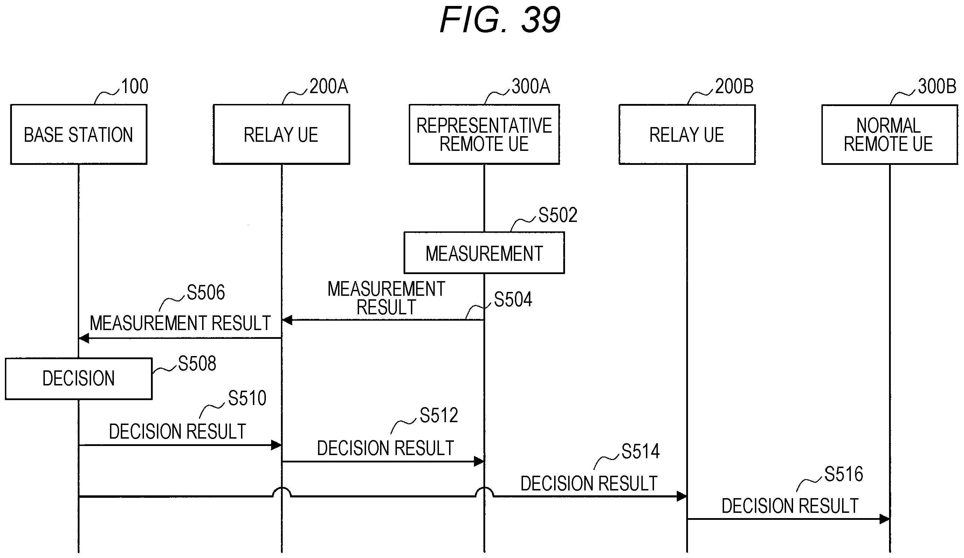

Fig. 39 is a sequence diagram for explaining a nineteenth scenario of this working example. As illustrated in Fig. 39, the representative remote UE 300A performs measurement (step S502) and transmits the measurement result to the base station 100 via the relay UE 200A (steps S504 and S506). Subsequently, the base station 100 performs decision on the basis of the measurement result (step S508). Then, the base station 100 transmits the decision result to the representative remote UE 300A via the relay UE 200A (steps S510 and S512) and transmits the decision result to the normal remote UE 300B via the relay UE 200B (steps S514 and S516). In this manner, the decision may be performed by the base station 100.

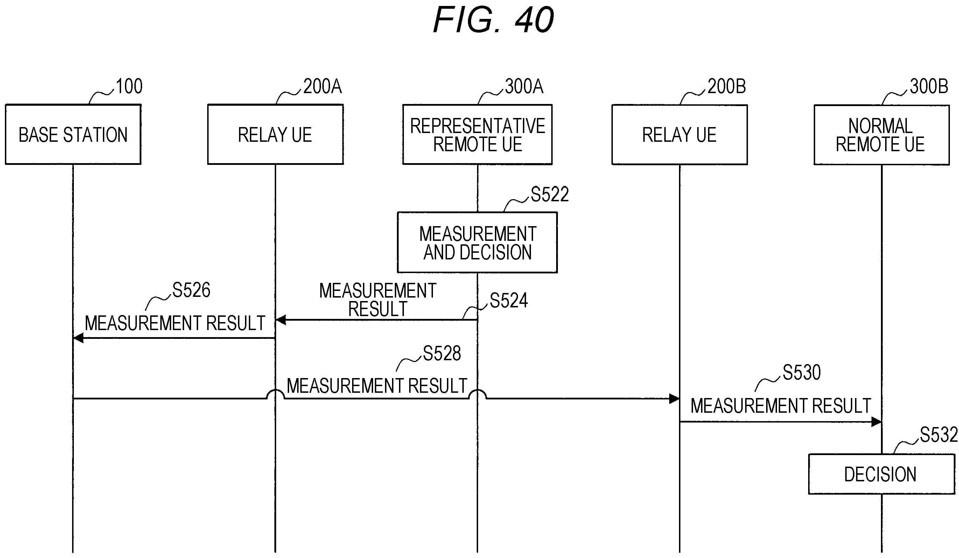

Fig. 40 is a sequence diagram for explaining a twentieth scenario of this working example. As illustrated in Fig. 40, the representative remote UE 300A performs measurement and decision (step S522). Subsequently, the representative remote UE 300A transmits the measurement result to the normal remote UE 300B via first the relay UE 200A, then the base station 100, and then the relay UE 200B (steps S524, S526, S528, and S530). Then, the normal remote UE 300B performs decision on the basis of the measurement result (step S532). In this manner, the decision may be performed by both of the representative remote UE 300A and the normal remote UE 300B.

### <<5. Application Examples>>

The technology according to the present disclosure can be applied to diverse products. For example, the base station 100 may be realized as any type of evolved node B (eNB) such as a macro eNB or a small eNB. The small eNB may be an eNB that covers a cell smaller than a macro cell, such as a pico eNB, a micro eNB, or a home (femto) eNB. Instead, the base station 100 may be realized as another type of base station such as a node B or a base transceiver station (BTS). The base station 100 may include a main body (also referred to as a base station apparatus) that controls radio communication, and one or more remote radio heads (RRHs) deployed at places different from the place of the main body. Furthermore, diverse types of terminals to be described later may work as the base station 100 by temporarily or semipermanently executing the base station function.

In addition, for example, the terminal apparatus 200 or 300 may be realized as a mobile terminal such as a smartphone, a tablet personal computer (PC), a notebook PC, a portable game terminal, a portable/dongle type mobile router, or digital camera, or an in-vehicle terminal such as a car navigation apparatus. Alternatively, the terminal apparatus 200 or 300 may be realized as a terminal that performs machine-to-machine (M2M) communication (also referred to as a machine type communication (MTC) terminal). Moreover, the terminal apparatus 200 or 300 may be a radio communication module (for example, an integrated circuit module constituted by a single die) equipped on this terminal.

### <5.1. Application Examples relating to Base Station>

### (First Application Example)

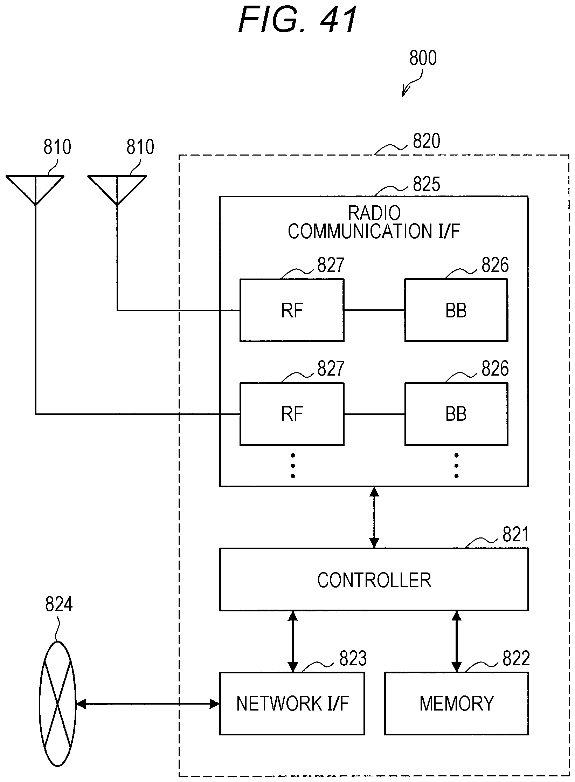

Fig. 41 is a block diagram illustrating a first example of a schematic configuration of an eNB to which the technology according to the present disclosure can be applied. The eNB 800 has one or more antennas 810 and a base station apparatus 820. Each antenna 810 and the base station apparatus 820 can be interconnected via a radio frequency (RF) cable.

Each of the antennas 810 has a single antenna element or a plurality of antenna elements (for example, a plurality of antenna elements constituting a multiple-input multiple-output (MIMO) antenna) and is used by the base station apparatus 820 to transmit and receive radio signals. The eNB 800 has a plurality of antennas 810 as illustrated in Fig. 41, and the plurality of antennas 810 may correspond to, for example, a plurality of frequency bands used by the eNB 800 in a one-to-one manner. Note that, although Fig. 41 illustrates an example in which the eNB 800 has the plurality of antennas 810, the eNB 800 may have a single antenna 810.

The base station apparatus 820 includes a controller 821, a memory 822, a network interface 823, and a radio communication interface 825.

The controller 821 may be, for example, a central processing unit (CPU) or a digital signal processor (DSP), and causes diverse functions of the upper layer of the base station apparatus 820 to work. For example, the controller 821 generates a data packet from data in a signal processed by the radio communication interface 825, and transfers the generated packet via the network interface 823. The controller 821 may generate a bundled packet by bundling data from a plurality of baseband processors and transfer the generated bundled packet. Furthermore, the controller 821 may have logical functions that execute control such as radio resource control, radio bearer control, mobility management, admission control, and scheduling. In addition, the above-mentioned control may be performed in cooperation with a neighboring eNB or a core network node. The memory 822 includes a random access memory (RAM) and a read only memory (ROM), and stores programs executed by the controller 821 and diverse types of control data (for example, a terminal list, transmission power data, scheduling data, and the like).

The network interface 823 is a communication interface for connecting the base station apparatus 820 to a core network 824. The controller 821 may communicate with a core network node or another eNB via the network interface 823. In that case, the eNB 800 and the core network node or another eNB may be interconnected by a logical interface (for example, an S1 interface or an X2 interface). The network interface 823 may be a wired communication interface or a radio communication interface for a radio backhaul. In a case where the network interface 823 is a radio communication interface, the network interface 823 may use a higher frequency band for radio communication than the frequency band used by the radio communication interface 825.

The radio communication interface 825 supports any cellular communication scheme such as long term evolution (LTE) or LTE-Advanced, and provides a radio connection to a terminal located in the cell of the eNB 800 via the antenna 810. Typically, the radio communication interface 825 can include a baseband (BB) processor 826, an RF circuit 827, and the like. The BB processor 826 may perform, for example, coding/decoding, modulation/demodulation, and multiplexing/demultiplexing, and executes diverse signal processes on each layer (for example, L1, medium access control (MAC), radio link control (RLC), and packet data convergence protocol (PDCP)). The BB processor 826 may have a part or all of the logical functions described above instead of the controller 821. The BB processor 826 may be a module including a memory that stores a communication control program, a processor that executes the program, and related circuits, and alteration to the function of the BB processor 826 may be allowed by updating the above program. Furthermore, the above-mentioned module may be a card or a blade inserted into a slot of the base station apparatus 820, or may be a chip equipped on such a card or blade. Meanwhile, the RF circuit 827 may include a mixer, a filter, an amplifier, and the like, and transmits and receives radio signals via the antenna 810.

The radio communication interface 825 includes a plurality of BB processors 826 as illustrated in Fig. 41, and the plurality of BB processors 826 may correspond to, for example, a plurality of frequency bands used by the eNB 800 in a one-to-one manner. Furthermore, the radio communication interface 825 includes a plurality of RF circuits 827 as illustrated in Fig. 41, and the plurality of RF circuits 827 may correspond to, for example, a plurality of antenna elements in a one-to-one manner. Note that, although Fig. 41 illustrates an example in which the radio communication interface 825 includes the plurality of BB processors 826 and the plurality of RF circuits 827, the radio communication interface 825 may include a single BB processor 826 or a single RF circuit 827.

In the eNB 800 illustrated in Fig. 41, one or more constituent elements included in the base station 100 described with reference to Fig. 2 (the setting unit 151 and/or the communication control unit 153) may be mounted in the radio communication interface 825. Alternatively, at least a part of these constituent elements may be mounted in the controller 821. As one example, the eNB 800 may be equipped with a module including a part (for example, the BB processor 826) or all of the radio communication interface 825 and/or the controller 821 such that the one or more constituent elements mentioned above are mounted in this module. In this case, the above module may store a program for causing a processor to function as the one or more constituent elements (in different terms, a program for causing a processor to execute the action of the one or more constituent elements) and execute the program. As another example, a program for causing a processor to function as the one or more constituent elements may be installed in the eNB 800 such that the radio communication interface 825 (for example, the BB processor 826) and/or the controller 821 execute the program. As described above, the eNB 800, the base station apparatus 820, or the above-mentioned module may be provided as an apparatus including the one or more constituent elements, and a program for causing a processor to function as the one or more constituent elements may be provided. Furthermore, a readable recording medium recording the above program may be provided.

In addition, in the eNB 800 illustrated in Fig. 41, the radio communication unit 120 described with reference to Fig. 2 may be mounted in the radio communication interface 825 (for example, the RF circuit 827). Additionally, the antenna unit 110 may be mounted in the antenna 810. Furthermore, the network communication unit 130 may be mounted in the controller 821 and/or the network interface 823. In addition, the storage unit 140 may be mounted in the memory 822.

### (Second Application Example)

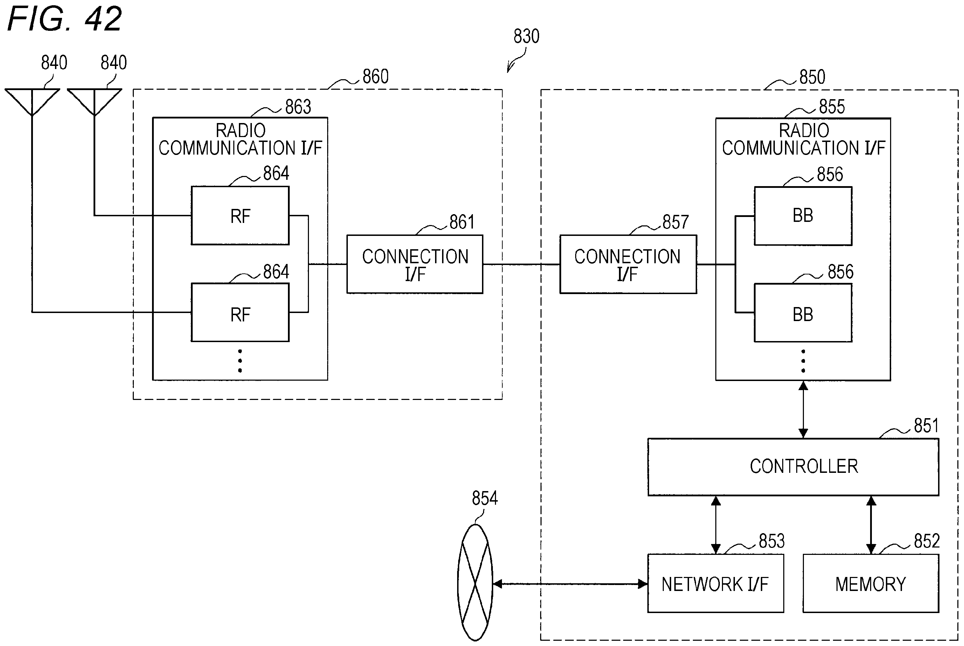

Fig. 42 is a block diagram illustrating a second example of a schematic configuration of an eNB to which the technology according to the present disclosure can be applied. The eNB 830 has one or more antennas 840, a base station apparatus 850, and an RRH 860. Each antenna 840 and the RRH 860 can be interconnected via an RF cable. Furthermore, the base station apparatus 850 and the RRH 860 can be interconnected by a high speed line such as an optical fiber cable.

Each of the antennas 840 has a single antenna element or a plurality of antenna elements (for example, a plurality of antenna elements constituting a MIMO antenna) and is used by the RRH 860 to transmit and receive radio signals. The eNB 830 has a plurality of antennas 840 as illustrated in Fig. 42, and the plurality of antennas 840 may correspond to, for example, a plurality of frequency bands used by the eNB 830 in a one-to-one manner. Note that, although Fig. 42 illustrates an example in which the eNB 830 has the plurality of antennas 840, the eNB 830 may have a single antenna 840.

The base station apparatus 850 includes a controller 851, a memory 852, a network interface 853, a radio communication interface 855, and a connection interface 857. The controller 851, the memory 852, and the network interface 853 are similar to the controller 821, the memory 822, and the network interface 823 described with reference to Fig. 41.

The radio communication interface 855 supports any cellular communication scheme such as LTE or LTE-Advanced, and provides a radio connection to a terminal located in a sector corresponding to the RRH 860 via the RRH 860 and the antenna 840. Typically, the radio communication interface 855 can include a BB processor 856, and the like. The BB processor 856 is similar to the BB processor 826 described with reference to Fig. 41 except that the BB processor 856 is connected to an RF circuit 864 of the RRH 860 via the connection interface 857. The radio communication interface 855 includes a plurality of BB processors 856 as illustrated in Fig. 42, and the plurality of BB processors 856 may correspond to, for example, a plurality of frequency bands used by the eNB 830 in a one-to-one manner. Note that, although Fig. 42 illustrates an example in which the radio communication interface 855 includes the plurality of BB processors 856, the radio communication interface 855 may include a single BB processor 856.

The connection interface 857 is an interface for connecting the base station apparatus 850 (radio communication interface 855) to the RRH 860. The connection interface 857 may be a communication module for communication on the above-mentioned high speed line that connects the base station apparatus 850 (radio communication interface 855) and the RRH 860.

Furthermore, the RRH 860 includes a connection interface 861 and a radio communication interface 863.

The connection interface 861 is an interface for connecting the RRH 860 (radio communication interface 863) to the base station apparatus 850. The connection interface 861 may be a communication module for communication on the above-mentioned high speed line.

The radio communication interface 863 transmits and receives radio signals via the antenna 840. Typically, the radio communication interface 863 can include an RF circuit 864, and the like. The RF circuit 864 may include a mixer, a filter, an amplifier, and the like, and transmits and receives radio signals via the antenna 840. The radio communication interface 863 includes a plurality of RF circuits 864 as illustrated in Fig. 42, and the plurality of RF circuits 864 may correspond to, for example, a plurality of antenna elements in a one-to-one manner. Note that, although Fig. 42 illustrates an example in which the radio communication interface 863 includes the plurality of RF circuits 864, the radio communication interface 863 may include a single RF circuit 864.

In the eNB 830 illustrated in Fig. 42, one or more constituent elements included in the base station 100 described with reference to Fig. 2 (the setting unit 151 and/or the communication control unit 153) may be mounted in the radio communication interface 855 and/or the radio communication interface 863. Alternatively, at least a part of these constituent elements may be mounted in the controller 851. As one example, the eNB 830 may be equipped with a module including a part (for example, the BB processor 856) or all of the radio communication interface 855 and/or the controller 851 such that the one or more constituent elements mentioned above are mounted in this module. In this case, the above module may store a program for causing a processor to function as the one or more constituent elements (in different terms, a program for causing a processor to execute the action of the one or more constituent elements) and execute the program. As another example, a program for causing a processor to function as the one or more constituent elements may be installed in the eNB 830 such that the radio communication interface 855 (for example, the BB processor 856) and/or the controller 851 execute the program. As described above, the eNB 830, the base station apparatus 850, or the above-mentioned module may be provided as an apparatus including the one or more constituent elements, and a program for causing a processor to function as the one or more constituent elements may be provided. Furthermore, a readable recording medium recording the above program may be provided.

In addition, in the eNB 830 illustrated in Fig. 42, for example, the radio communication unit 120 described with reference to Fig. 2 may be mounted in the radio communication interface 863 (for example, the RF circuit 864). Additionally, the antenna unit 110 may be mounted in the antenna 840. Furthermore, the network communication unit 130 may be mounted in the controller 851 and/or the network interface 853. In addition, the storage unit 140 may be mounted in the memory 852.

### <5.2. Application Examples relating to Terminal Apparatus>

### (First Application Example)

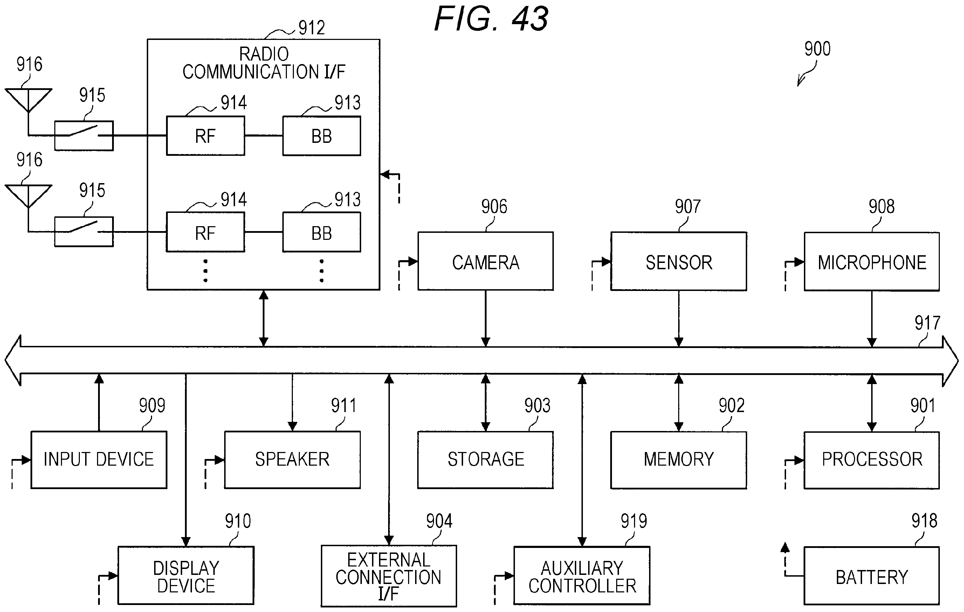

Fig. 43 is a block diagram illustrating an example of a schematic configuration of a smartphone 900 to which the technology according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system-on-chip (SoC) and controls functions of an application layer and other layers of the smartphone 900. The memory 902 includes a RAM and a ROM and stores programs and data to be executed by the processor 901. The storage 903 can include a storage medium such as a semiconductor memory or a hard disk. The external connection interface 904 is an interface for connecting an external device such as a memory card or a universal serial bus (USB) device to the smartphone 900.

The camera 906 has an image pickup element such as a charge coupled device (CCD) or a complementary metal oxide semiconductor (CMOS) and generates a picked-up image, for example. The sensor 907 can include a group of sensors such as a positioning sensor, a gyro sensor, a geomagnetic sensor, and an acceleration sensor, for example. The microphone 908 converts audio input to the smartphone 900 into an audio signal. The input device 909 includes, for example, a touch sensor that detects a touch on a screen of the display device 910, a keypad, a keyboard, a button, a switch, or the like, and accepts an operation or information input from a user. The display device 910 has a screen such as a liquid crystal display (LCD) or an organic light emitting diode (OLED) display and displays an output image from the smartphone 900. The speaker 911 converts an audio signal output from the smartphone 900 into audio.

The radio communication interface 912 supports any cellular communication scheme such as LTE or LTE-Advanced to execute radio communication. Typically, the radio communication interface 912 can include a BB processor 913, an RF circuit 914, and the like. The BB processor 913 may perform, for example, encoding/decoding, modulation/demodulation, and multiplexing/demultiplexing, and executes diverse signal processes for radio communication. Meanwhile, the RF circuit 914 may include a mixer, a filter, an amplifier, and the like, and transmits and receives radio signals via the antenna 916. The radio communication interface 912 may be a one-chip module in which the BB processor 913 and the RF circuit 914 are integrated. The radio communication interface 912 may include a plurality of BB processors 913 and a plurality of RF circuits 914 as illustrated in Fig. 43. Note that, although Fig. 43 illustrates an example in which the radio communication interface 912 includes the plurality of BB processors 913 and the plurality of RF circuits 914, the radio communication interface 912 may include a single BB processor 913 or a single RF circuit 914.

Moreover, in addition to the cellular communication scheme, the radio communication interface 912 may support other types of radio communication schemes, such as a near field radio communication scheme, a close proximity radio communication scheme, or a radio local area network (LAN) scheme, and in that case, may include the BB processor 913 and the RF circuit 914 for each radio communication scheme.

Each of the antenna switches 915 switches the connection destination of the antenna 916 among a plurality of circuits (for example, circuits for different radio communication schemes) included in the radio communication interface 912.

Each of the antennas 916 has a single antenna element or a plurality of antenna elements (for example, a plurality of antenna elements constituting a MIMO antenna) and is used by the radio communication interface 912 to transmit and receive radio signals. The smartphone 900 may have a plurality of antennas 916 as illustrated in Fig. 43. Note that, although Fig. 43 illustrates an example in which the smartphone 900 has the plurality of antennas 916, the smartphone 900 may have a single antenna 916.

Moreover, the smartphone 900 may include the antenna 916 for each radio communication scheme. In that case, the antenna switch 915 may be omitted from the configuration of the smartphone 900.

The bus 917 interconnects the processor 901, the memory 902, the storage 903, the external connection interface 904, the camera 906, the sensor 907, the microphone 908, the input device 909, the display device 910, the speaker 911, the radio communication interface 912, and the auxiliary controller 919. The battery 918 supplies power to each block of the smartphone 900 illustrated in Fig. 43 via a power supply line partially indicated by broken lines in Fig. 43. The auxiliary controller 919 causes minimum necessary functions of the smartphone 900 to work, for example, during a sleep mode.

In the smartphone 900 illustrated in Fig. 43, one or more constituent elements included in the relay UE 200 described with reference to Fig. 3 (communication control unit 241) or one or more constituent elements included in the remote UE 300 described with reference to Fig. 4 (the measurement processing unit 341 and/or the communication control unit 343) may be mounted in the radio communication interface 912. Alternatively, at least a part of these constituent elements may be mounted in the processor 901 or the auxiliary controller 919. As one example, the smartphone 900 may be equipped with a module including a part (for example, the BB processor 913) or all of the radio communication interface 912, the processor 901, and/or the auxiliary controller 919 such that the one or more constituent elements mentioned above are mounted in this module. In this case, the above module may store a program for causing a processor to function as the one or more constituent elements (in different terms, a program for causing a processor to execute the action of the one or more constituent elements) and execute the program. As another example, a program for causing a processor to function as the one or more constituent elements may be installed in the smartphone 900 such that the radio communication interface 912 (for example, the BB processor 913), the processor 901, and/or the auxiliary controller 919 execute the program. As described above, the smartphone 900 or the above-mentioned module may be provided as an apparatus including the one or more constituent elements, and a program for causing a processor to function as the one or more constituent elements may be provided. Furthermore, a readable recording medium recording the above program may be provided.

In addition, in the smartphone 900 illustrated in Fig. 43, for example, the radio communication unit 220 described with reference to Fig. 3 or the radio communication unit 320 described with reference to Fig. 4 may be mounted in the radio communication interface 912 (for example, the RF circuit 914). Additionally, the antenna unit 210 or the antenna unit 310 may be mounted in the antenna 916. Furthermore, the storage unit 230 or the storage unit 330 may be mounted in the memory 902.

### (Second Application Example)

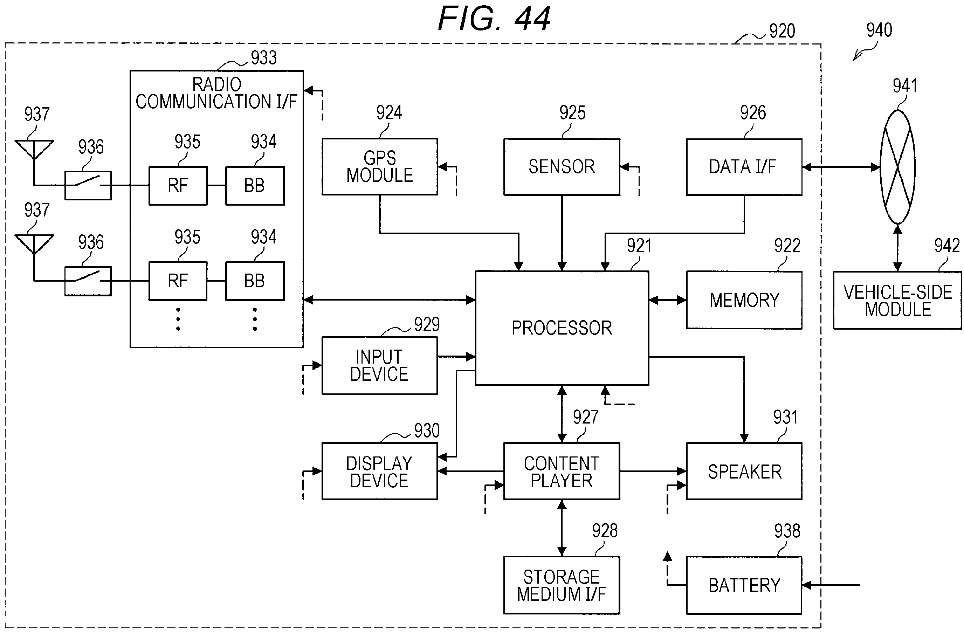

Fig. 44 is a block diagram illustrating an example of a schematic configuration of a car navigation apparatus 920 to which the technology according to the present disclosure can be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or an SoC and controls a navigation function and other functions of the car navigation apparatus 920. The memory 922 includes a RAM and a ROM and stores programs and data to be executed by the processor 921.

The GPS module 924 measures the position (for example, latitude, longitude, and altitude) of the car navigation apparatus 920 using a GPS signal received from a GPS satellite. The sensor 925 can include a group of sensors such as a gyro sensor, a geomagnetic sensor, and a barometric sensor, for example. The data interface 926 is connected, for example, to an in-vehicle network 941 via a port not illustrated and acquires data generated by a vehicle, such as vehicle speed data.

The content player 927 reproduces content stored in a storage medium (for example, a compact disc (CD) or a digital versatile disc (DVD)) inserted in the storage medium interface 928. The input device 929 includes, for example, a touch sensor that detects a touch on a screen of the display device 930, a button, a switch, or the like, and accepts an operation or information input from a user. The display device 930 has a screen such as an LCD or an OLED display and displays the navigation function or an image of the content being reproduced. The speaker 931 outputs audio of the navigation function or the content being reproduced.

The radio communication interface 933 supports any cellular communication scheme such as LTE or LTE-Advanced to execute radio communication. Typically, the radio communication interface 933 can include a BB processor 934, an RF circuit 935, and the like. The BB processor 934 may perform, for example, encoding/decoding, modulation/demodulation, and multiplexing/demultiplexing, and executes diverse signal processes for radio communication. Meanwhile, the RF circuit 935 may include a mixer, a filter, an amplifier, and the like, and transmits and receives radio signals via the antenna 937. The radio communication interface 933 may be a one-chip module in which the BB processor 934 and the RF circuit 935 are integrated. The radio communication interface 933 may include a plurality of BB processors 934 and a plurality of RF circuits 935 as illustrated in Fig. 44. Note that, although Fig. 44 illustrates an example in which the radio communication interface 933 includes the plurality of BB processors 934 and the plurality of RF circuits 935, the radio communication interface 933 may include a single BB processor 934 or a single RF circuit 935.

Moreover, in addition to the cellular communication scheme, the radio communication interface 933 may support other types of radio communication schemes, such as a near field radio communication scheme, a close proximity radio communication scheme, or a radio LAN scheme, and in that case, may include the BB processor 934 and the RF circuit 935 for each radio communication scheme.

Each of the antenna switches 936 switches the connection destination of the antenna 937 among a plurality of circuits (for example, circuits for different radio communication schemes) included in the radio communication interface 933.

Each of the antennas 937 has a single antenna element or a plurality of antenna elements (for example, a plurality of antenna elements constituting a MIMO antenna) and is used by the radio communication interface 933 to transmit and receive radio signals. The car navigation apparatus 920 may have a plurality of antennas 937 as illustrated in Fig. 44. Note that, although Fig. 44 illustrates an example in which the car navigation apparatus 920 has the plurality of antennas 937, the car navigation apparatus 920 may have a single antenna 937.

Moreover, the car navigation apparatus 920 may include the antenna 937 for each radio communication scheme. In that case, the antenna switch 936 may be omitted from the configuration of the car navigation apparatus 920.

The battery 938 supplies power to each block of the car navigation apparatus 920 illustrated in Fig. 44 via a power supply line partially indicated by broken lines in Fig. 44. In addition, the battery 938 accumulates power supplied from the vehicle.

In the car navigation apparatus 920 illustrated in Fig. 44, one or more constituent elements included in the relay UE 200 described with reference to Fig. 3 (communication control unit 241) or one or more constituent elements included in the remote UE 300 described with reference to Fig. 4 (the measurement processing unit 341 and/or the communication control unit 343) may be mounted in the radio communication interface 933. Alternatively, at least a part of these constituent elements may be mounted in the processor 921. As one example, the car navigation apparatus 920 may be equipped with a module including a part (for example, the BB processor 934) or all of the radio communication interface 933 and/or the processor 921 such that the one or more constituent elements mentioned above are mounted in this module. In this case, the above module may store a program for causing a processor to function as the one or more constituent elements (in different terms, a program for causing a processor to execute the action of the one or more constituent elements) and execute the program. As another example, a program for causing a processor to function as the one or more constituent elements may be installed in the car navigation apparatus 920 such that the radio communication interface 933 (for example, the BB processor 934) and/or the processor 921 execute the program. As described above, the car navigation apparatus 920 or the above-mentioned module may be provided as an apparatus including the one or more constituent elements, and a program for causing a processor to function as the one or more constituent elements may be provided. Furthermore, a readable recording medium recording the above program may be provided.

In addition, in the car navigation apparatus 920 illustrated in Fig. 44, for example, the radio communication unit 220 described with reference to Fig. 3 or the radio communication unit 320 described with reference to Fig. 4 may be mounted in the radio communication interface 933 (for example, the RF circuit 935). Additionally, the antenna unit 210 or the antenna unit 310 may be mounted in the antenna 937. Furthermore, the storage unit 230 or the storage unit 330 may be mounted in the memory 922.

In addition, the technology according to the present disclosure may be realized as an in-vehicle system (or vehicle) 940 including one or more blocks of the car navigation apparatus 920 described above, the in-vehicle network 941, and a vehicle-side module 942. The vehicle-side module 942 generates vehicle-side data such as vehicle speed, engine speed, or failure information and outputs the generated data to the in-vehicle network 941.

### <<6. Conclusion>>

Hereinabove, embodiments of the present disclosure have been described in detail with reference to Figs. 1 to 44. As described above, according to the first embodiment, the remote UE 300 selects a link to measure on the basis of the association information that correlates the relay UE 200 with the remote UE 300. Since the links to be measured are limited, the number of times of measurement can be reduced as compared with a case where the links to be measured are not limited, and as a result, the power consumed by the remote UE 300 is suppressed. In particular, the remote UE 300 can continue communication via the relay UE 200 having a reliable relationship with less consumed power by preferentially measuring the link with the remote UE 300 having an association relationship.

Furthermore, different resources are set for discovery or communication between the relay UE 200 having an association relationship and the relay UE 200 having no association relationship; accordingly, when measuring the link with the remote UE 300 having an association relationship, the remote UE 300 is only required to measure limited resources and can suppress consumed power.

In addition, according to the second embodiment, in a case where other remote UE 300 is present in the vicinity, the remote UE 300 performs measurement and generates shared information based on the measurement result to share with other remote UE 300 in a case where the remote UE 300 is selected as a representative, and accepts sharing of the shared information from other remote UE 300 selected as a representative in a case where the remote UE 300 is not selected as a representative. This makes it possible to reduce the number of times of measurement in the entire plurality of pieces of the remote UE 300 located in the vicinity and to suppress the overall consumed power owing to the reduction.

The favorable embodiments of the present disclosure have been described in detail thus far with reference to the accompanying drawings. However, the technological scope of the present disclosure is not limited to these examples. It is clear that a person with average knowledge on the technological field of the present disclosure can arrive at various variations or modifications within the range of the technological spirit disclosed in claims and as a matter of course, these variations or modifications are comprehended as part of the technological scope of the present disclosure.

For example, the first embodiment and the second embodiment of the present disclosure can be combined as appropriate. For example, the representative remote UE 300 may preferentially measure the link with the relay UE 200 having an association relationship with the representative remote UE 300, to share the measurement result with other remote UE 300.

Furthermore, in the present description, the processes described with reference to the flowcharts and sequence diagrams do not necessarily have to be executed in the illustrated order. Some processing steps may be executed in parallel. In addition, additional processing steps may be employed and some processing steps may be omitted.

Furthermore, the effects described in the present description are merely illustrative or exemplary and are not limiting. That is, the technology according to the present disclosure can exhibit other effects obvious to those skilled in the art from the description of the present description together with the above-described effects or instead of the above-described effects.

Note that configurations as described below are also within the technological scope of the present disclosure.
(1) A remote communication apparatus capable of communicating with a base station via mediation of communication by a relay communication apparatus configured to be movable,
   the remote communication apparatus including
   a control unit that selects a link to measure on the basis of association information that correlates a first relay communication apparatus with the remote communication apparatus.
(2) The remote communication apparatus according to (1) above, in which the control unit preferentially selects and measures a link with the first relay communication apparatus over other links.
(3) The remote communication apparatus according to (2) above, in which the control unit skips measurement of another link in a case where the remote communication apparatus is connected to the first relay communication apparatus.
(4) The remote communication apparatus according to (3) above, in which, in a case where the remote communication apparatus is connected to the first relay communication apparatus, the control unit selects whether or not to skip measurement of another link on the basis of quality of a link with the first relay communication apparatus or presence or absence of a measurement request for the another link.
(5) The remote communication apparatus according to any one of (1) to (4) above, in which different resources are set for discovery or communication between the first relay communication apparatus and a second relay communication apparatus other than the first relay communication apparatus.
(6) The remote communication apparatus according to (5) above, in which the resources include a resource pool or a resource block.
(7) The remote communication apparatus according to (5) or (6) above, in which the resources are dynamically set by a base station.
(8) The remote communication apparatus according to any one of (1) to (7) above, in which a connection destination link is decided on the basis of a measurement result and the association information.
(9) The remote communication apparatus according to (8) above, in which a link with the first relay communication apparatus is preferentially decided as the connection destination link.
(10) The remote communication apparatus according to (9) above, in which a link with the base station is decided as the connection destination link with a priority next to a link with the first relay communication apparatus.
(11) The remote communication apparatus according to (10) above, in which a link with a second relay communication apparatus other than the first relay communication apparatus is decided as the connection destination link with a priority next to a link with the base station.
(12) A relay communication apparatus configured to be movable to mediate communication between base stations and remote communication apparatuses,
   the relay communication apparatus including
   a control unit that uses different resources to transmit a signal to one of the remote communication apparatuses correlated with the relay communication apparatus and a signal to one of the remote communication apparatuses not correlated with the relay communication apparatus.
(13) A base station capable of communicating with remote communication apparatuses via mediation of communication by relay communication apparatuses configured to be movable,
   the base station including
   a control unit that sets different resources between for one of the relay communication apparatuses and one of the remote communication apparatuses correlated with each other and for one of the relay communication apparatuses and one of the remote communication apparatuses not correlated with each other.
(14) A remote communication apparatus capable of communicating with a base station via mediation of communication by a relay communication apparatus configured to be movable,
   the remote communication apparatus including a control unit that controls a measurement process, in which
   in a case where another remote communication apparatus is present in a vicinity of the remote communication apparatus, the control unit performs measurement and generates shared information based on a measurement result to share with the another remote communication apparatus in a case where the remote communication apparatus is selected as a representative, and accepts sharing of the shared information from the another remote communication apparatus selected as a representative in a case where the remote communication apparatus is not selected as a representative.
(15) The remote communication apparatus according to (14) above, in which the representative is selected on the basis of capabilities of the remote communication apparatus and the another remote communication apparatus.
(16) The remote communication apparatus according to (14) or (15) above, in which the representative is selected on the basis of geolocation information of the remote communication apparatus and the another remote communication apparatus.
(17) The remote communication apparatus according to any one of (14) to (16) above, in which the representative is selected on the basis of relative position information of the remote communication apparatus and the another remote communication apparatus.
(18) The remote communication apparatus according to any one of (14) to (17) above, in which the representative is selected on the basis of link quality of the remote communication apparatus and the another remote communication apparatus with a base station or a relay communication apparatus.
(19) The remote communication apparatus according to any one of (14) to (18) above, in which the representative is selected on the basis of security requirements of the remote communication apparatus and the another remote communication apparatus.
(20) The remote communication apparatus according to any one of (14) to (19) above, in which the representative is selected on the basis of association information of the remote communication apparatus and the another remote communication apparatus.
(21) The remote communication apparatus according to any one of (14) to (20) above, in which
   in a case where the remote communication apparatus selected as the representative satisfies a predetermined condition, selection of the representative is released, and
   the predetermined condition includes at least one of a decrease in remaining battery power, expiration of a timer, or a leave from a cell.
(22) The remote communication apparatus according to any one of (14) to (21) above, in which the shared information includes at least one of the measurement result, a decision result for a connection destination link based on the measurement result, or information indicating a state of a remote communication apparatus selected as the representative.
(23) The remote communication apparatus according to any one of (14) to (22) above, in which the shared information is shared using only a sidelink, or an uplink and a downlink, or a sidelink, an uplink, and a downlink.
(24) A method executed by a remote communication apparatus capable of communicating with a base station via mediation of communication by a relay communication apparatus configured to be movable,
   the method including
   selecting a link to measure on the basis of association information that correlates a first relay communication apparatus with the remote communication apparatus.
(25) A recording medium recording a program for causing
   a computer of a remote communication apparatus capable of communicating with a base station via mediation of communication by a relay communication apparatus configured to be movable, to function as
   a control unit that selects a link to measure on the basis of association information that correlates a first relay communication apparatus with the remote communication apparatus.
(26) A method executed by a relay communication apparatus configured to be movable to mediate communication between base stations and remote communication apparatuses,
   the method including
   using different resources to transmit a signal to one of the remote communication apparatuses correlated with the relay communication apparatus and a signal to one of the remote communication apparatuses not correlated with the relay communication apparatus.
(27) A recording medium recording a program for causing
   a computer of a relay communication apparatus configured to be movable to mediate communication between base stations and remote communication apparatuses, to function as
   a control unit that uses different resources to transmit a signal to one of the remote communication apparatuses correlated with the relay communication apparatus and a signal to one of the remote communication apparatuses not correlated with the relay communication apparatus.
(28) A method executed by a base station capable of communicating with remote communication apparatuses via mediation of communication by relay communication apparatuses configured to be movable,
   the method including
   setting different resources between for one of the relay communication apparatuses and one of the remote communication apparatuses correlated with each other and for one of the relay communication apparatuses and one of the remote communication apparatuses not correlated with each other.
(29) A recording medium recording a program for causing
   a computer of a base station capable of communicating with remote communication apparatuses via mediation of communication by relay communication apparatuses configured to be movable, to function as
   a control unit that sets different resources between for one of the relay communication apparatuses and one of the remote communication apparatuses correlated with each other and for one of the relay communication apparatuses and one of the remote communication apparatuses not correlated with each other.
(30) A method executed by a remote communication apparatus capable of communicating with a base station via mediation of communication by a relay communication apparatus configured to be movable, the method including
   controlling a measurement process, in which
   the controlling the measurement process includes, in a case where another remote communication apparatus is present in a vicinity of the remote communication apparatus, performing measurement and generating shared information based on a measurement result to share with the another remote communication apparatus in a case where the remote communication apparatus is selected as a representative, and accepting sharing of the shared information from the another remote communication apparatus selected as a representative in a case where the remote communication apparatus is not selected as a representative.
(31) A recording medium recording a program for causing
   a computer of a remote communication apparatus capable of communicating with a base station via mediation of communication by a relay communication apparatus configured to be movable, to function as
   a control unit that controls a measurement process, in which
   in a case where another remote communication apparatus is present in a vicinity of the remote communication apparatus, the control unit performs measurement and generates shared information based on a measurement result to share with the another remote communication apparatus in a case where the remote communication apparatus is selected as a representative, and accepts sharing of the shared information from the another remote communication apparatus selected as a representative in a case where the remote communication apparatus is not selected as a representative.

### REFERENCE SIGNS LIST

- 1: System
- 100: Base station
- 101: Cell
- 110: Antenna unit
- 120: Radio communication unit
- 130: Network communication unit
- 140: Storage unit
- 150: Control unit
- 151: Setting unit
- 153: Communication control unit
- 200: Terminal apparatus, relay UE
- 210: Antenna unit
- 220: Radio communication unit
- 230: Storage unit
- 240: Control unit
- 241: Communication control unit
- 300: Terminal apparatus, remote UE
- 310: Antenna unit
- 320: Radio communication unit
- 330: Storage unit
- 340: Control unit
- 341: Measurement processing unit
- 343: Communication control unit

## Claims

1. A remote communication apparatus capable of communicating with a base station via mediation of communication by a relay communication apparatus configured to be movable,
the remote communication apparatus comprising
a control unit that selects a link to measure on a basis of association information that correlates a first relay communication apparatus with the remote communication apparatus.

2. The remote communication apparatus according to claim 1, wherein the control unit preferentially selects and measures a link with the first relay communication apparatus over other links.

3. The remote communication apparatus according to claim 2, wherein the control unit skips measurement of another link in a case where the remote communication apparatus is connected to the first relay communication apparatus.

4. The remote communication apparatus according to claim 3, wherein, in a case where the remote communication apparatus is connected to the first relay communication apparatus, the control unit selects whether or not to skip measurement of another link on a basis of quality of a link with the first relay communication apparatus or presence or absence of a measurement request for the another link.

5. The remote communication apparatus according to claim 1, wherein different resources are set for discovery or communication between the first relay communication apparatus and a second relay communication apparatus other than the first relay communication apparatus.

6. The remote communication apparatus according to claim 5, wherein the resources include a resource pool or a resource block.

7. The remote communication apparatus according to claim 5, wherein the resources are dynamically set by a base station.

8. The remote communication apparatus according to claim 1, wherein a connection destination link is decided on a basis of a measurement result and the association information.

9. The remote communication apparatus according to claim 8, wherein a link with the first relay communication apparatus is preferentially decided as the connection destination link.

10. The remote communication apparatus according to claim 9, wherein a link with the base station is decided as the connection destination link with a priority next to a link with the first relay communication apparatus.

11. The remote communication apparatus according to claim 10, wherein a link with a second relay communication apparatus other than the first relay communication apparatus is decided as the connection destination link with a priority next to a link with the base station.

12. A relay communication apparatus configured to be movable to mediate communication between base stations and remote communication apparatuses,
the relay communication apparatus comprising
a control unit that uses different resources to transmit a signal to one of the remote communication apparatuses correlated with the relay communication apparatus and a signal to one of the remote communication apparatuses not correlated with the relay communication apparatus.

13. A base station capable of communicating with remote communication apparatuses via mediation of communication by relay communication apparatuses configured to be movable,
the base station comprising
a control unit that sets different resources between for one of the relay communication apparatuses and one of the remote communication apparatuses correlated with each other and for one of the relay communication apparatuses and one of the remote communication apparatuses not correlated with each other.

14. A remote communication apparatus capable of communicating with a base station via mediation of communication by a relay communication apparatus configured to be movable,
the remote communication apparatus comprising a control unit that controls a measurement process, wherein
in a case where another remote communication apparatus is present in a vicinity of the remote communication apparatus, the control unit performs measurement and generates shared information based on a measurement result to share with the another remote communication apparatus in a case where the remote communication apparatus is selected as a representative, and accepts sharing of the shared information from the another remote communication apparatus selected as a representative in a case where the remote communication apparatus is not selected as a representative.

15. The remote communication apparatus according to claim 14, wherein the representative is selected on a basis of capabilities of the remote communication apparatus and the another remote communication apparatus.

16. The remote communication apparatus according to claim 14, wherein the representative is selected on a basis of geolocation information of the remote communication apparatus and the another remote communication apparatus.

17. The remote communication apparatus according to claim 14, wherein the representative is selected on a basis of relative position information of the remote communication apparatus and the another remote communication apparatus.

18. The remote communication apparatus according to claim 14, wherein the representative is selected on a basis of link quality of the remote communication apparatus and the another remote communication apparatus with a base station or a relay communication apparatus.

19. The remote communication apparatus according to claim 14, wherein the representative is selected on a basis of security requirements of the remote communication apparatus and the another remote communication apparatus.

20. The remote communication apparatus according to claim 14, wherein the representative is selected on a basis of association information of the remote communication apparatus and the another remote communication apparatus.

21. The remote communication apparatus according to claim 14, wherein
in a case where the remote communication apparatus selected as the representative satisfies a predetermined condition, selection of the representative is released, and
the predetermined condition includes at least one of a decrease in remaining battery power, expiration of a timer, or a leave from a cell.

22. The remote communication apparatus according to claim 14, wherein the shared information includes at least one of the measurement result, a decision result for a connection destination link based on the measurement result, or information indicating a state of a remote communication apparatus selected as the representative.

23. The remote communication apparatus according to claim 14, wherein the shared information is shared using only a sidelink, or an uplink and a downlink, or a sidelink, an uplink, and a downlink.

24. A method executed by a remote communication apparatus capable of communicating with a base station via mediation of communication by a relay communication apparatus configured to be movable,
the method comprising
selecting a link to measure on a basis of association information that correlates a first relay communication apparatus with the remote communication apparatus.

25. A recording medium recording a program for causing
a computer of a remote communication apparatus capable of communicating with a base station via mediation of communication by a relay communication apparatus configured to be movable, to function as
a control unit that selects a link to measure on a basis of association information that correlates a first relay communication apparatus with the remote communication apparatus.

26. A method executed by a relay communication apparatus configured to be movable to mediate communication between base stations and remote communication apparatuses,
the method comprising
using different resources to transmit a signal to one of the remote communication apparatuses correlated with the relay communication apparatus and a signal to one of the remote communication apparatuses not correlated with the relay communication apparatus.

27. A recording medium recording a program for causing
a computer of a relay communication apparatus configured to be movable to mediate communication between base stations and remote communication apparatuses, to function as
a control unit that uses different resources to transmit a signal to one of the remote communication apparatuses correlated with the relay communication apparatus and a signal to one of the remote communication apparatuses not correlated with the relay communication apparatus.

28. A method executed by a base station capable of communicating with remote communication apparatuses via mediation of communication by relay communication apparatuses configured to be movable,
the method comprising
setting different resources between for one of the relay communication apparatuses and one of the remote communication apparatuses correlated with each other and for one of the relay communication apparatuses and one of the remote communication apparatuses not correlated with each other.

29. A recording medium recording a program for causing
a computer of a base station capable of communicating with remote communication apparatuses via mediation of communication by relay communication apparatuses configured to be movable, to function as
a control unit that sets different resources between for one of the relay communication apparatuses and one of the remote communication apparatuses correlated with each other and for one of the relay communication apparatuses and one of the remote communication apparatuses not correlated with each other.

30. A method executed by a remote communication apparatus capable of communicating with a base station via mediation of communication by a relay communication apparatus configured to be movable, the method comprising
controlling a measurement process, wherein
the controlling the measurement process includes, in a case where another remote communication apparatus is present in a vicinity of the remote communication apparatus, performing measurement and generating shared information based on a measurement result to share with the another remote communication apparatus in a case where the remote communication apparatus is selected as a representative, and accepting sharing of the shared information from the another remote communication apparatus selected as a representative in a case where the remote communication apparatus is not selected as a representative.

31. A recording medium recording a program for causing
a computer of a remote communication apparatus capable of communicating with a base station via mediation of communication by a relay communication apparatus configured to be movable, to function as
a control unit that controls a measurement process, wherein
in a case where another remote communication apparatus is present in a vicinity of the remote communication apparatus, the control unit performs measurement and generates shared information based on a measurement result to share with the another remote communication apparatus in a case where the remote communication apparatus is selected as a representative, and accepts sharing of the shared information from the another remote communication apparatus selected as a representative in a case where the remote communication apparatus is not selected as a representative.
